# EUROPEAN PATENT APPLICATION

(11) **EP 4 379 913 A1**
(43) Date of publication of application: **05.06.2024**
(21) Application number: 21960384.2
(22) Date of filing: 29.10.2021
(51) Int. Cl.: H01M 50/103, H01M 50/202

(54) **BATTERY, ELECTRICAL DEVICE, AND METHOD AND DEVICE FOR PREPARING BATTERY**

(30) Priority: 12.10.2021 CN 202111188271
(71) Applicant: Contemporary Amperex Technology Co., Limited, Fujian PRC 352100 (CN)
(72) Inventor: XU, Hu, Ningde, Fujian 352100 (CN)
(74) Representative: Ziebig Hengelhaupt Intellectual Property Attorneys Patentanwaltskanzlei PartGmbB
(86) International application number: PCT/CN2021/127453
(87) International publication number: WO 2023/060657

(57) **Abstract**

Embodiments of this application provide a battery (10), an electric apparatus, a method for preparing a battery, and an apparatus for preparing a battery, so as to enhance the stiffness and strength of the battery. The battery (10) includes a box (100); and a first battery cell group (200a) and a second battery cell group (200b) that are accommodated in the box (100), where the first battery cell (20a) and the second battery cell (20b) are polyhedral structures, a wall with a largest area of the first battery cell (20a) serves as a first wall (201a) of the first battery cell (20a), a wall with a largest area of the second battery cell (20b) serves as a second wall (202b) of the second battery cell (20b), the at least one first battery cell (20a) in the first battery cell group (200a) is arranged in a first direction (z), adjacent ones of the at least one first battery cell (20a) are mutually attached through first walls (201a) thereof, the at least one second battery cell (20b) in the second battery cell group (200b) is arranged in a second direction (y), adjacent ones of the at least one second battery cell (20b) are mutually attached through second walls (202b) thereof, and the first direction (z) is perpendicular to the second direction (y).

## Description

This application claims priority to Chinese Patent Application No. 202111188271.0, filed with the China National Intellectual Property Administration on October 12, 2021 and entitled "BATTERY CELL, BATTERY, AND ELECTRIC APPARATUS", which is incorporated herein by reference in its entirety.

### TECHNICAL FIELD

Embodiments of this application relate to the battery field, and more specifically, to a battery, an electric apparatus, and a method and an apparatus for preparing a battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

Batteries are installed in electric apparatuses, for example, electric vehicles. Movement of the electric vehicle causes some impact on the battery, and if the battery has weak stiffness and strength, such impact will have an adverse effect on performance of the battery and may cause safety problems. Therefore, how the stiffness and strength of batteries are enhanced is an urgent technical problem that needs to be solved in battery technologies.

### SUMMARY

This application provides a battery, an electric apparatus, a method for preparing a battery, and an apparatus for preparing a battery, so as to enhance stiffness and strength of the battery.

According to a first aspect, a battery is provided, where the battery includes: a box; and a first battery cell group and a second battery cell group that are accommodated in the box, where the first battery cell group includes at least one first battery cell, the second battery cell group includes at least one second battery cell, the first battery cell and the second battery cell are polyhedral structures, a wall with a largest area of the first battery cell serves as a first wall of the first battery cell, a wall with a largest area of the second battery cell serves as a second wall of the second battery cell, the at least one first battery cell in the first battery cell group are arranged in a first direction, adjacent ones of the first battery cells are mutually attached through first walls thereof, the at least one second battery cell in the second battery cell group is arranged in a second direction, adjacent ones of the at least one second battery cell are mutually attached through second walls thereof, and the first direction is perpendicular to the second direction.

Based on the technical solutions in the embodiments of this application, the at least one first battery cell in the first battery cell group is mutually attached through their first walls with the largest area and arranged in the first direction; and during operation of the battery, the first battery cell in the first battery cell group swells mainly towards the first direction, stress generated by the swelling on the first wall accumulates in the first direction, and the heat generated by the first battery cell in the first battery cell group is also transferred mainly through its first wall. Accordingly, the at least one second battery cell in the second battery cell group is mutually attached through their second walls with the largest area and arranged in the second direction; and the second battery cell in the second battery cell group swells mainly towards the second direction, stress generated by the swelling on the second wall accumulates in the second direction, and the heat generated by the second battery cell in the second battery cell group is also transferred mainly through its second wall. Therefore, the technical solutions in the embodiments of this application can prevent the stress and heat generated in all battery cells in the battery from accumulating and transferring in a same direction, enhancing the overall stiffness and strength of the battery and improving the safety performance of the battery in the electric apparatus.

In some possible implementations, the first battery cell group and the second battery cell group are arranged in the second direction, and second walls of a plurality of first battery cells in the first battery cell group are attached to the second walls of the second battery cells in the second battery cell group that are adjacent to the first battery cell group, so as to implement mutual attaching between the first battery cell group and the second battery cell group.

Based on the technical solutions in these implementations, the first battery cell group and the second battery cell group are mutually attached to form a whole installed in the box, and compared with the technical solutions in which the first battery cell group and the second battery cell group are spaced apart from each other, fillers provided between the first battery cell group and the second battery cell group can be avoided, such that the overall energy density of the battery can be improved and the weight of the battery can be reduced. In addition, the at least one first battery cell in the first battery cell group that has the first wall with a larger area faces towards the first direction instead of the second direction, such that the at least one first battery cell has a smaller degree of swelling on its second wall facing the second direction, and the first battery cell group has higher strength and stiffness in the second direction. In the embodiments of this application, the first battery cell group may serve as a support member located on one side of the second battery cell group, and can form a support for the second battery cell group in the second direction and experience the stresses accumulated in the second direction by the second wall of the second battery cell in the second battery cell group, enhancing the overall stiffness and strength of the battery in the second direction.

In some possible implementations, a difference between a size of the first battery cell group in the first direction and a size of the second battery cell group in the first direction falls within a predetermined range; and/or a difference between a size of the first battery cell group in a third direction and a size of the second battery cell group in the third direction falls within a predetermined range, where the third direction is perpendicular to the first direction and the second direction.

Based on the technical solutions in these implementations, the overall shape formed by the first battery cell group and the second battery cell group can be made more regular, which facilitates the overall installation of the first battery cell group and the second battery cell group in the box with a regular shape, reduces the installation space required for the first battery cell group and the second battery cell group, and increases the energy density of the battery.

In some possible implementations, the battery includes two first battery cell groups and one second battery cell group that are arranged in the second direction; and in the second direction, the two first battery cell groups are located at two ends of the second battery cell group.

Based on the technical solutions in these implementations, the first battery cell group is disposed on each of two sides of the second battery cell group in the second direction. The at least one first battery cell in the first battery cell group that has the first wall with a larger area faces towards the first direction instead of the second direction, such that the at least one first battery cell has a smaller degree of swelling on its second wall facing the second direction, and the first battery cell group has higher strength and stiffness in the second direction. In this embodiment of this application, the first battery cell group may serve as an end plate located on each of two ends of the second battery cell group, and can form a support for the second battery cell group in the second direction and experience the stresses accumulated in the second direction by the second wall of the second battery cell in the second battery cell group, enhancing the overall stiffness and strength of the battery in the second direction.

In some possible implementations, the battery includes one first battery cell group and two second battery cell groups that are arranged in the second direction; and in the second direction, the two second battery cell groups are located at two ends of the first battery cell group.

Based on the technical solutions in these implementations, the first battery cell group may serve as a beam between the two second battery cell groups, and can form a support in the second direction for the second battery cell groups on the two sides and experience the stresses accumulated in the second direction by the second wall of the second battery cell in the second battery cell group, enhancing the overall stiffness and strength of the battery in the second direction. In addition, the plurality of second battery cells in the second battery cell group are mutually attached through their second walls with a largest area, such that the heat generated by the plurality of second battery cells can be transferred within the entire second battery cell group through the second walls. In contrast, the second wall of the at least one first battery cell in the first battery cell group that faces towards the second direction is not the wall with the largest area of the first battery cell, and the second wall of the first battery cell has a more limited heat conductivity. Therefore, the first battery cell group can serve as a thermal barrier so as to reduce the heat transfer between the second battery cell groups on the two sides of the first battery cell group. If thermal runaway occurs in a second battery cell in the second battery cell groups, only other second battery cells in the second battery cell group to which the second battery cell belongs are affected, while the impact on the first battery cell group and other second battery cell groups is smaller, thereby enhancing the overall safety performance of the battery.

In some possible implementations, the battery includes a plurality of first battery cell groups and a plurality of second battery cell groups that are arranged in the second direction; and in the second direction, the plurality of first battery cell groups and the plurality of second battery cell groups are arranged alternately.

Based on the technical solutions in these implementations, the plurality of first battery cell groups and the plurality of second battery cell groups are arranged alternately in the second direction, and the plurality of first battery cell groups can serve as a beam between the plurality of second battery cell groups and can play a good supporting role for the plurality of second battery cell groups, enhancing the stiffness and strength of the battery in the second direction to a greater extent.

In some possible implementations, all the first battery cell groups have a same number of first battery cells; and/or all the second battery cell groups have a same number of second battery cells.

Based on the technical solutions of this embodiment, all the first battery cell groups in the battery may have a same size, and/or all the second battery cell groups have a same size. The plurality of first battery cell groups having a same size may be uniformly distributed among the second battery cell groups, and similarly, the plurality of second battery cell groups having a same size may be uniformly distributed among the first battery cell groups, such that the battery has a more uniform and symmetrical internal structure, which is conducive to enhancing the stability of the battery.

In some possible implementations, the first direction is parallel to the direction of gravity, the first battery cell includes a first wall and a second wall that are interconnected, the second battery cell includes a first wall and a second wall that are interconnected, the first wall of the first battery cell and the first wall of the second battery cell are perpendicular to the first direction, and the second wall of the first battery cell and the second wall of the second battery cell are both inclined with respect to the first direction.

Based on the technical solutions in this embodiment, in the second battery cell group, the second walls of adjacent ones of the second battery cells mutually attached are inclined with respect to the first direction, that is, inclined with respect to the direction of gravity, such that the adjacent second walls form interaction forces parallel to the direction of gravity. In this way, each of the second battery cells has at least one inclined second wall pressed by the inclined second wall of the adjacent second battery cell, and interaction forces between the adjacent second battery cells make the two mutually restrained and restricted, which can enhance the overall stiffness and strength of the battery and reduce the potential safety hazards of the battery caused by vibration and shock during use. In addition, if the first battery cell group and the second battery cell group are mutually attached, the first battery cell group and the second battery cell group can also be mutually restrained and restricted by the inclined second walls, which can further enhance the overall stiffness and strength of the battery and reduce the potential safety hazards of the battery caused by vibration and shock during use.

In some possible implementations, the first battery cell includes two opposite first walls and two opposite second walls, and the first battery cell has a parallelogram or trapezoid cross section on a plane perpendicular to the first wall and the second wall thereof; and/or the second battery cell includes two opposite first walls and two opposite second walls, and the second battery cell has a parallelogram or trapezoid cross section on a plane perpendicular to the first wall and the second wall thereof.

In some possible implementations, a plurality of first battery cells in the first battery cell group are arranged in a thickness direction thereof, the first walls and the second walls that are interconnected in the first battery cells extend in a length direction of the first battery cells, and/or at least one of the second battery cells in the second battery cell group is arranged in a thickness direction thereof, the first wall and the second wall that are interconnected in the second battery cell extend in a length direction of the second battery cell.

In some possible implementations, the first battery cell further includes a third wall at one end of the first battery cell in the length direction, where electrode terminals of the first battery cell are disposed on the third wall; and/or the second battery cell further includes a third wall at one end of the second battery cell in the length direction, where electrode terminals of the second battery cell group are disposed on the third wall.

Based on the technical solutions in these implementations, the electrode terminals of the first battery cell and the second battery cell can be disposed on the third walls at the ends thereof in the length direction, without affecting the attachment between the first walls and second walls of the first battery cell and the second battery cell that extend in the length direction thereof and that have a larger area and other portions, ensuring better stability of the first battery cell and the second battery cell.

In some possible implementations, the electrode terminals of at least one of the first battery cells in the first battery cell group are arranged in the first direction; and/or the electrode terminals of at least one of the second battery cells in the second battery cell group are arranged in the second direction.

Based on the technical solutions in these implementations, the electrode terminals of the at least one first battery cell can be electrically connected to each other through a short busbar component, and the electrode terminals of the plurality of second battery cells can be electrically connected to each other through shorter busbars, thereby facilitating the arrangement and installation of the busbars in the box of the battery.

In some possible implementations, in the first direction, the box includes an upper cover and a bottom plate, in the second direction, the box includes a first side wall and a second side wall, and the first battery cell group and the second battery cell group are spaced apart from each other in the second direction; where the electrode terminals of the first battery cell in the first battery cell group are disposed close to the first side wall or the second side wall, and the electrode terminals of the second battery cell in the second battery cell group are disposed close to the upper cover or the bottom plate.

Based on the technical solutions in these implementations, the electrode terminals of the first battery cell in the first battery cell group are disposed close to the first side wall or the second side wall in the second direction, such that the electrode terminals of the first battery cell in the first battery cell group can be made close to the second battery cell group adjacent to the first battery cell group, and in the first direction, the electrode terminals of the second battery cell in the second battery cell group are disposed close to the top cover or the bottom plate, such that the electrode terminals of the second battery cells in the second battery cell group can be adjacent to the electrode terminals of the first battery cell in the first battery cell group that are near the top cover or bottom plate. In this way, the busbars for connecting the first battery cell group and the second battery cell group that are adjacent are relatively short, which further facilitates the arrangement and installation of the busbars in the box of the battery and optimizes the overall performance of the battery.

In some possible implementations, the electrode terminals of the first battery cells in the first battery cell group are disposed close to each other or away from each other.

In some possible implementations, the electrode terminals of a plurality of first battery cells in the first battery cell group are disposed close to the second battery cell group.

Based on the technical solutions in these implementations, the first battery cell group and the second battery cell group can be electrically connected to each other through shorter busbars, thereby facilitating the arrangement and installation of the busbars in the box of the battery.

In some possible implementations, the number of first battery cells in the first battery cell group is less than the number of second battery cells in the second battery cell group.

In some possible implementations, the first battery cell and the second battery cell are battery cells of two different chemical systems.

Based on the technical solutions in these implementations, by taking into consideration the stiffness and strength of the battery, the advantages of battery cells of various chemical systems can be combined so as to enhance the overall performance of the battery, leading to a more extensive range of applications.

In some possible implementations, a swelling coefficient of the first battery cell is smaller than that of the second battery cell.

Based on the technical solutions in these implementations, reducing the impact of the swelling of the first battery cell group on the battery during operation can further enhance the overall stiffness and strength of the battery.

In some possible implementations, the energy density of the first battery cell is smaller than that of the second battery cell.

Based on the technical solutions in these implementations, enhancing the safety performance of the first battery cell group can further enhance the overall safety performance of the battery.

According to a second aspect, an electric apparatus is provided, where the electric apparatus includes the battery according to any one of the first aspect or the possible implementations of the first aspect, and the battery is configured to supply electrical energy.

According to a third aspect, a method for preparing a battery is provided, where the method includes: providing a box; providing a first battery cell group and a second battery cell group, where the first battery cell group includes at least one first battery cell, the second battery cell group includes at least one second battery cell, the first battery cell and the second battery cell are polyhedral structures, a wall with a largest area of the first battery cell serves as a first wall of the first battery cell, a wall with a largest area of the second battery cell serves as a second wall of the second battery cell, at least one of the first battery cells in the first battery cell group are arranged in a first direction, adjacent ones of the first battery cells are mutually attached through first walls thereof, the at least one second battery cell in the second battery cell group is arranged in a second direction, adjacent ones of the at least one second battery cell are mutually attached through second walls thereof, and the first direction is perpendicular to the second direction; and accommodating the first battery cell group and the second battery cell group in the box.

According to a fourth aspect, an apparatus for preparing a battery is provided, where the apparatus includes: a providing module, configured to: provide a box; provide a first battery cell group and a second battery cell group, where the first battery cell group includes at least one first battery cell, the second battery cell group includes at least one second battery cell, the first battery cell and the second battery cell are polyhedral structures, a wall with a largest area of the first battery cell serves as a first wall of the first battery cell, a wall with a largest area of the second battery cell serves as a second wall of the second battery cell, at least one of the first battery cells in the first battery cell group are arranged in a first direction, adjacent ones of the first battery cells are mutually attached through first walls thereof, the at least one second battery cell in the second battery cell group is arranged in a second direction, adjacent ones of the at least one second battery cell are mutually attached through second walls thereof, and the first direction is perpendicular to the second direction; and an installation module, configured to accommodate the first battery cell group and the second battery cell group in the box.

Based on the technical solutions in the embodiments of this application, the at least one first battery cell in the first battery cell group is mutually attached through their first walls with the largest area and arranged in the first direction; and during operation of the battery, the first battery cell in the first battery cell group swells mainly towards the first direction, stress generated by the swelling on the first wall accumulates in the first direction, and the heat generated by the first battery cell in the first battery cell group is also transferred mainly through its first wall. Accordingly, the at least one second battery cell in the second battery cell group is mutually attached through their second walls with the largest area and arranged in the second direction; and the second battery cell in the second battery cell group swells mainly towards the second direction, stress generated by the swelling on the second wall accumulates in the second direction, and the heat generated by the second battery cell in the second battery cell group is also transferred mainly through its second wall. Therefore, the technical solutions in the embodiments of this application can prevent the stress and heat generated in all battery cells in the battery from accumulating and transferring in a same direction, enhancing the overall stiffness and strength of the battery and improving the safety performance of the battery in the electric apparatus.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic structural diagram of a battery according to an embodiment of this application;
FIG. 5 shows schematic top and cross sectional views of a battery as according to an embodiment of this application;
FIG. 6 shows schematic top and cross sectional views of a battery as according to an embodiment of this application;
FIG. 7 shows schematic structures of three types of first battery cells according to an embodiment of this application;
FIG. 8 shows schematic front and side views of a first battery cell according to an embodiment of this application;
FIG. 9 shows schematic structures of three types of second battery cells according to an embodiment of this application;
FIG. 10 shows schematic front and side views of a second battery cell according to an embodiment of this application;
FIG. 11 shows schematic top and cross sectional views of a battery as according to an embodiment of this application;
FIG. 12 shows schematic top and cross sectional views of a battery as according to an embodiment of this application;
FIG. 13 shows schematic top and cross sectional views of a battery as according to an embodiment of this application;
FIG. 14 shows schematic structures of two type of batteries according to an embodiment of this application;
FIG. 15 is a schematic flowchart of a method for preparing a battery according to an embodiment of this application; and
FIG. 16 is a schematic block diagram of an apparatus for preparing a battery according to an embodiment of this application.

The accompanying drawings are not drawn to scale.

### DESCRIPTION OF EMBODIMENTS

The following further describes implementations of this application in detail with reference to accompanying drawings and embodiments. The following detailed description of embodiments and the accompanying drawings are used to illustrate the principle of this application, but cannot be used to limit the scope of this application, meaning this application is not limited to the described embodiments.

In the descriptions of this application, it should be understood that, unless otherwise specified, "a plurality of" means at least two; orientations or positional relationships indicated by the terms "up", "down", "left", "right", "inside", "outside", and the like are intended only for the ease and brevity of description of this application, rather than indicating or implying that an apparatus or element must have a particular direction or must be constructed and operated in a particular orientation. Therefore, they shall not be construed as any limitation on this application. In addition, the terms "first", "second", "third", and the like are merely intended for a purpose of description, and shall not be understood as an indication or implication of relative importance. "Perpendicular" is not strictly vertical, but within the allowable range of error. "Parallel" is not strictly parallel, but within the allowable range of error.

The orientation terms appearing in the following description all are directions shown in the figures, and do not limit the specific structure of the application. In the descriptions of this application, it should also be noted that, unless otherwise specified and defined explicitly, the terms "install", "connect" and "join" are to be interpreted broadly, for example, may be fixedly connected, or detachably connected, or integrally connected, may be directly connected, or indirectly connected through an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The battery in this application is a single physical module that includes one or more battery cells for providing electric power. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium ion secondary battery, a lithium ion primary battery, a lithium-sulfur battery, a sodium/lithium-ion battery, a sodium ion battery, a magnesium ion battery, or the like. This is not limited in the embodiments of this application. In some implementations, the battery cell may also be referred to as a cell.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is applied on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. A material of the separator may be polypropylene (Polypropylene, PP), polyethylene (Polyethylene, PE), or the like. In addition, the electrode assembly may be a wound structure or a stacked structure, but the embodiments of this application are not limited thereto.

For the development of battery technology, many design factors need to be considered, for example, performance parameters such as energy density, cycle life, discharge capacity, and charge and discharge rate, as well as the stability of installation of the battery in the electric apparatus, so as to enhance the safety of the battery in the electric apparatus.

In some battery packaging technologies, for conventional prismatic cells such as blade battery cells, large faces of the battery cells can be connected to each other through structural adhesive, and then the resulting connected battery cells are installed and disposed in a box of the battery. During the continuous operation of a battery cell, high-pressure gas will be generated inside the battery cell, and the high-pressure gas causes the battery cell to swell, thus producing large stress on the large faces in the battery cell. In a plurality of battery cells interconnected through the large faces, the stress continues to accumulate in a direction of the connection of the plurality of battery cells, affecting the overall strength and stiffness of the battery in this direction, thus bringing safety hazards.

In view this, this application provides a technical solution in which a first battery cell group and a second battery cell group are accommodated in a box of a battery, where the first battery cell group includes at least one first battery cell, the at least one first battery cell is arranged in a first direction, adjacent ones of the at least one first battery cell are mutually attached through their first walls with a largest area; at least one of second battery cells in the second battery cell group is arranged in a second direction, adjacent ones of the second battery cells are mutually attached through a second wall with a largest area thereof, and the first direction is perpendicular to the second direction. Based on this implementation, the at least one first battery cell in the first battery cell group is mutually attached through their first walls with the largest area and arranged in the first direction, the first battery cell in the first battery cell group swells mainly towards the first direction, and stress generated by the swelling on the first wall accumulates in the first direction. Accordingly, at least one of the second battery cells in the second battery cell group is mutually attached through their second walls with the largest area and arranged in the second direction, the second battery cells in the second battery cell group swell mainly towards the second direction, and stress generated by the swelling on the second wall accumulates in the second direction. Therefore, the technical solutions in the embodiments of this application can prevent the stress generated in all battery cells in the battery due to the swelling from accumulating in a same direction, enhancing the overall stiffness and strength of the battery and improving the safety performance of the battery in the electric apparatus.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are applicable to not only the apparatuses described above but also all apparatuses using batteries. However, for brevity of description, in the following embodiments, an electric vehicle is used as an example for description.

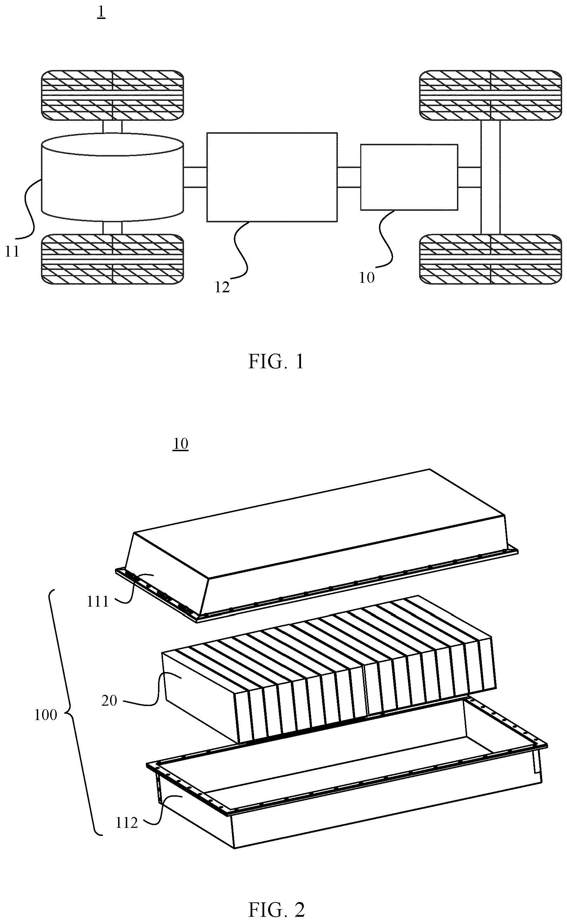

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 may be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first be combined into battery modules that are then combined into a battery.

For example, FIG. 2 is a schematic structural diagram of a battery 10 according to an embodiment of this application. The battery 10 may include a plurality of battery cells 20. The battery 10 may further include a box 100 (or referred to as a cover), where the box 100 has a hollow structure inside, and the plurality of battery cells 20 are accommodated in the box 100. As shown in FIG. 2, the box 100 may include two portions, which are herein referred to as a first portion 111 and a second portion 112 respectively, and the first portion 111 and the second portion 112 are snap-fitted together. Shapes of the first portion 111 and the second portion 112 may be determined based on a shape in which the plurality of battery cells 20 are combined, and the first portion 111 and the second portion 112 each may have an opening. For example, the first portion 111 and the second portion 112 each may be a hollow cuboid and have only one face with an opening, the opening of the first portion 111 is disposed opposite the opening of the second portion 112, and the first portion 111 and the second portion 112 are snap-fitted to form a box 100 with an enclosed chamber. The plurality of battery cells 20 are connected in parallel, in series, or in series and parallel, and then put into the box 100 formed after the first portion 111 and the second portion 112 are snap-fitted.

Optionally, in an implementation, the plurality of battery cells (cell) 20 may be first integrated into at least one battery module (module), and then the battery module is installed in the box 100 of the battery 10 to form a battery pack (pack). In this implementation, auxiliary structural members such as beams may be arranged between the battery modules, which can improve the stability of installation of the battery modules in the box 100.

Optionally, in a second implementation, the plurality of battery cells 20 may also be directly connected to each other and then installed in the box 100 to form a battery pack, eliminating the intermediate state of battery module, and the box 100 can be provided with no auxiliary structural members such as beams, thus reducing the mass of the battery 10 and increasing the energy density of the battery 10. This implementation may also be known as cell to pack (cell to pack, CTP) installation technology in the related art.

Optionally, in a third implementation, the box 100 may be integrated into an electric apparatus in which the battery 10 is located, in other words, the box 100 may be integrally formed with structural members in the electric apparatus. The plurality of battery cells 20, after being connected to each other, can be installed directly in the box 100 of the electric apparatus. In an example, the box 100 may be integrated in a local region of the chassis of the vehicle 1, and after the plurality of battery cells 20 are interconnected, they may be installed directly in the chassis of the vehicle 1. This implementation may also be known as cell to chassis (cell to chassis, CTC) installation technology in the related art.

Optionally, the battery 10 may further include other structures. Details are not described herein. For example, the battery 10 may further include a busbar, where the busbar is configured to implement an electrical connection between a plurality of battery cells 20, for example, a parallel connection, a series connection, or a series and parallel connection. Specifically, the busbar may implement the electrical connection between the battery cells 20 by connecting electrode terminals of the battery cells 20. Further, the busbar may be fixed to the electrode terminal of the battery cell 20 by welding. Electrical energy of the plurality of battery cells 20 may be further led out through the box 100 by a conductive mechanism. Optionally, the conductive mechanism may also belong to the busbar.

Based on different power demands, battery cells 20 can be set in any quantity. The plurality of battery cells 20 may be connected in series, in parallel, or in series and parallel to achieve greater capacity or power.

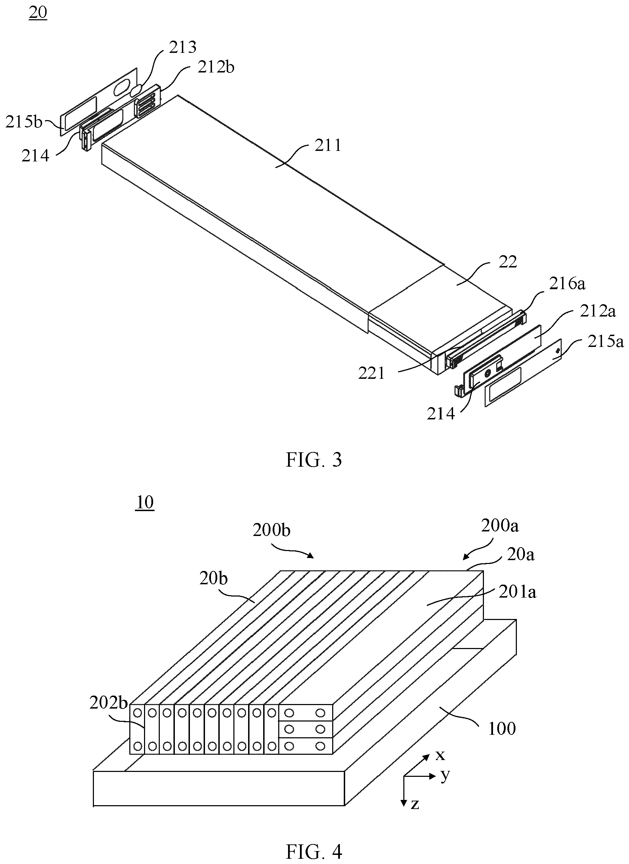

FIG. 3 is a schematic structural diagram of a battery cell 20 according to an embodiment of this application. The battery cell 20 includes one or more electrode assemblies 22, a housing 211, a first cover plate 212a, and a second cover plate 212b. A wall of the housing 211, the first cover plate 212a, and the second cover plate 212b are referred to as a wall of the battery cell 20. The housing 211 depends on a combined shape of the one or more electrode assemblies 22. In an example, the housing 211 shown in FIG. 3 may be a hollow cuboid. The housing 211 has an opening on at least one face such that the one or more electrode assemblies 22 can be placed inside the housing 211. For example, in the embodiment shown in FIG. 3, the housing 211 has an opening on each of two opposite sides, and the first cover plate 212a and the second cover plate 212b cover the openings on the two sides respectively and are connected to the housing 211 to form a closed chamber for accommodating the electrode assembly 22. The housing 211 is filled with an electrolyte such as a liquid electrolyte.

The battery cell 20 may further include two electrode terminals 214. Optionally, as shown in FIG. 3, the two electrode terminals 214 may be disposed on the first cover plate 212a and the second cover plate 212b, respectively. Alternatively, in other embodiments, the two electrode terminals 214 may be disposed on the same cover plate, for example, both are disposed on the first cover plate 212a or the second cover plate 212b.

The first cover plate 212a and the second cover plate 212b are typically flat plates, and the two electrode terminals 214 can be fixed on flat surfaces of the first cover plate 212a and the second cover plate 212b, respectively, and the two electrode terminals 214 are a positive electrode terminal and a negative electrode terminal, respectively. Each of the electrode terminals 214 is correspondingly provided with one connection member, which may alternatively be referred to as a current collection member. The current collection member is located between the first cover plate 212a and the electrode assembly 22 and between the second cover plate 212b and the electrode assembly 22. The connection member is configured to electrically connect the electrode assembly 22 and the electrode terminals 214.

Optionally, as shown in FIG. 3, the battery cell 20 may further include a first bracket 216a and a second bracket (not shown in the figure). The first bracket 216a is disposed between the electrode assembly 22 and the first cover plate 212a for fixing and connecting the first cover plate 212a. Correspondingly, the second bracket is disposed between the electrode assembly 22 and the second cover plate 212b for fixing and connecting the second cover plate 212b. Optionally, the connection members for connecting the electrode assembly 22 and the electrode terminals 214 may be located in the first bracket 216a and the second bracket, respectively.

Alternatively, in the battery cell 20, each of the electrode assemblies 22 has a first tab 221 and a second tab. The first tab 221 and the second tab have opposite polarities. For example, when the first tab 221 is a positive tab, the second tab is a negative tab. The first tabs 221a of the one or more electrode assemblies 22 are connected to one electrode terminal through one connection member, and the second tabs of the one or more electrode assemblies 22 are connected to the other electrode terminal through the other connection member. For example, as shown in FIG. 3, the electrode terminal 214 located on the first cover plate 212a may be connected to the first tab 221 through a connection member located in the first bracket 216a. In addition, the other electrode terminal 214 located on the second cover plate 212b may be connected to the second tab through another connection member located on the second bracket.

In an example, a pressure relief mechanism 213 may be further provided on one of the walls of the battery cell 20. The pressure relief mechanism 213 is configured to actuate the internal pressure or temperature of the battery cell 20 when the internal pressure or temperature reaches a threshold so as to relieve the internal pressure or temperature.

Optionally, in another embodiment of this application, the pressure relief mechanism 213 and the electrode terminals 214 are disposed on the same wall of the battery cell 20. In an example, as shown in FIG. 3, the electrode terminals 214 and the pressure relief mechanism 213 may both be disposed on the second cover plate 212b of the battery cell 20.

The pressure relief mechanism 213 and the electrode terminals 214 being disposed on the same wall of the battery cell 20 can facilitate the processing and installation of the pressure relief mechanism 213 and the electrode terminals 214, and is conducive to improving the production efficiency of the battery 10.

Certainly, in other embodiments of this application, the pressure relief mechanism 213 and the electrode terminals 214 may alternatively be disposed on different walls of the battery cell 20. For example, the two electrode terminals 214 in the battery 10 are disposed on the first cover plate 212a and the second cover plate 212b of the battery cell 20, respectively, and the pressure relief mechanism 213 is disposed on another wall of the battery 10 other than the first cover plate 212a and the second cover plate 212b.

The pressure relief mechanism 213 may be part of the wall on which it is located, or may be a separate structure from the wall on which it is located and be fixed to the wall on which it is located by, for example, welding. For example, in the embodiment shown in FIG. 3, when the pressure relief mechanism 213 is part of the second cover plate 212b, the pressure relief mechanism 213 can be formed by providing an indentation on the second cover plate 212b, and thickness of the second cover plate 212b corresponding to the indentation is less than thickness of the rest region of the pressure relief mechanism 213 other than the indentation. The indentation is the weakest position of the pressure relief mechanism 213. When the gas generated by the battery cell 20 is too much such that the internal pressure of the housing 211 rises and reaches the threshold or the internal temperature of the battery cell 20 rises and reaches the threshold due to the heat generated by the reaction inside the battery cell 20, the pressure relief mechanism 213 may split at the indentation and cause the inside and outside of the housing 211 to be connected, and the gas pressure and temperature are released to the outside through the splitting of the pressure relief mechanism 213, thus preventing the battery cell 20 from exploding.

In addition, the pressure relief mechanism 213 may be any possible pressure relief mechanism. This is not limited in the embodiments of this application. For example, the pressure relief mechanism 213 may be a temperature-sensitive pressure relief mechanism, where the temperature-sensitive pressure relief mechanism is configured to be melted when the internal temperature of the battery cell 20 provided with the pressure relief mechanism 213 reaches a threshold; and/or the pressure relief mechanism 213 may be a pressure-sensitive pressure relief mechanism, where the pressure-sensitive pressure relief mechanism is configured to be split when the internal pressure of the battery cell 20 provided with the pressure relief mechanism 213 reaches a threshold.

Optionally, as shown in FIG. 3, the battery cell 20 may further include a first protective layer 215a and a second protective layer 215b, where the first protective layer 215a and the second protective layer 215b cover the first cover plate 212a and the second cover plate 212b, respectively, so as to protect the members on the two cover plates. Optionally, when the first cover plate 212a and the second cover plate 212b are metal cover plates, the first protective layer 215a and the second protective layer 215b may be insulating layers for insulating the metal covers from the outside. In addition, it can be seen from FIG. 3 that the first protective layer 215a and the second protective layer 215b may have openings formed to adapt to in the electrode terminals 214 and the pressure relief mechanism 213, such that the electrode terminals 214 are connected to the busbar through the openings and the pressure relief mechanism 213 releases the internal pressure of the battery cell 20 through the openings.

FIG. 4 is a schematic structural diagram of a battery 10 according to an embodiment of this application.

As shown in FIG. 4, the battery 10 includes a box 100; and a first battery cell group 200a and a second battery cell group 200b that are accommodated in the box 100, where the first battery cell group 200a includes at least one first battery cell 20a, the second battery cell group 200b includes at least one second battery cell 20b, and the first battery cell 20a and the second battery cell 20b are polyhedral structures.

The at least one first battery cell 20a in the first battery cell group 200a is arranged in a first direction z, adjacent ones of the at least one first battery cell 20a are mutually attached through first walls 201a thereof, the at least one second battery cell 20b in the second battery cell group 200b is arranged in a second direction y, adjacent ones of the at least one second battery cell 20b are mutually attached through second walls 202b thereof, and the first direction z is perpendicular to the second direction y.

Optionally, in this embodiment of this application, the box 100 may be the box 100 in the embodiment shown in FIG. 2. To facilitate the installation of the box 100 in the electric apparatus, as an example rather than a limitation, the box 100 may be a hollow hexahedral structure.

Optionally, in this embodiment of this application, for internal structures of the first battery cell 20a in the first battery cell group 200a and the second battery cell 20b in the second battery cell group 200b, reference may be made to the related descriptions of the battery cell group 20 in the embodiment shown in FIG. 3.

Optionally, to facilitate installation of the first battery cell 20a and the second battery cell 20b in the box 100 and to enhance the stability of the installation of the battery cell group 20, the first battery cell 20a and the second battery cell 20b may be polyhedral structures. As an example rather than a limitation, in this embodiment of this application, the first battery cell 20a and the second battery cell 20b may be hexahedral structures.

Optionally, for the first battery cell 20a and the second battery cell 20b, first walls and second walls thereof may be the housing 211, the first cover plate 212a, or the second cover plate 212b in the battery cell group 20 of the embodiment shown in FIG. 3.

As shown in FIG. 4, the first battery cell group 200a includes at least one first battery cell 20a, where the at least one first battery cell 20a is mutually attached through first walls 201a with a largest area thereof and is arranged in a first direction z. Optionally, the first wall 201a of the first battery cell 20a may be coated with structural adhesive so as to interconnect adjacent ones of the at least one first battery cell 20a by using the structural adhesive. Optionally, when the first battery cell group 200a includes only one first battery cell 20a, the first wall 201a with a largest area of the first battery cell 20a may face towards the first direction z.

Correspondingly, the at least one second battery cell 20b in the second battery cell group 200b is mutually attached through second walls 202b with a largest area thereof and is arranged in a second direction y, where the second direction y is perpendicular to the first direction z. Optionally, the second wall 202b of the second battery cell 20b may be coated with structural adhesive so as to interconnect adjacent ones of the at least one second battery cell 20b by using the structural adhesive. Optionally, when the second battery cell group 200b includes only one second battery cell 20b, the second wall 202b with a largest area of the second battery cell 20b may face towards the second direction y.

The first battery cell 20a and the second battery cell 20b generate high pressure gas and heat inside during continuous operation, and the high pressure gas causes the first battery cell 20a and the second battery cell 20b to swell, which generates large stress on the first wall 201a with a larger area of the first battery cell 20a and the second wall 202b with a larger area of the second battery cell 20b, and most of the heat inside the first battery cell 20a and the second battery cell 20b is transferred through the walls with a larger area. Based on the technical solution in this embodiment of this application, the stress and heat generated by the first battery cell group 200a is transferred in a different direction from the stress and heat generated by the second battery cell group 200b so as to prevent the accumulation of stress in the same direction from affecting the strength and stiffness of the battery 10 in that direction, and also to prevent the continuous transfer of heat in the same direction from affecting normal operation of a plurality of battery cells, thereby enhancing the overall stiffness and strength of the battery 10 and improving the safety performance of the battery 10 in the electric apparatus.

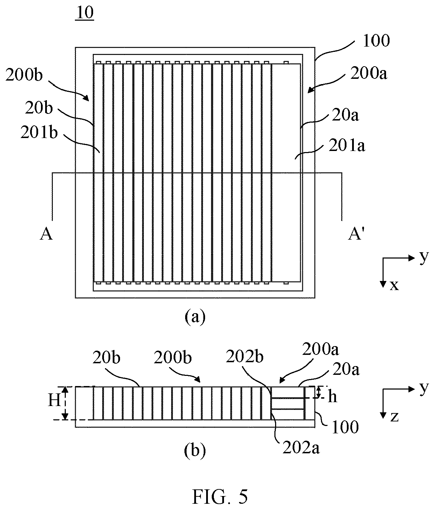

FIG. 5 is a schematic top and cross sectional view of the battery 10 in the embodiment shown in FIG. 4. (a) of FIG. 5 is a schematic top view of the battery 10, and (b) of FIG. 5 is a schematic cross sectional view of the battery 10 along direction A-A' in (a).

Optionally, with reference to FIG. 4 and FIG. 5, in this embodiment of this application, in order to facilitate the mutual attachment of the at least one first battery cell 20a in the first battery cell group 200a, the at least one first battery cell 20a in the first battery cell group 200a may be arranged in its thickness direction, in other words, the thickness direction of the at least one first battery cell 20a may be parallel to the first direction z. Furthermore, in order to make the first wall 201a of the first battery cell 20a have the largest area, the first wall 201a of the first battery cell 20a may extend in a length direction of the first battery cell 20a, and correspondingly, the second wall 202a interconnected therewith may likewise extend in the length direction of the first battery cell 20a.

Similarly, in order to facilitate the arrangement of the plurality of second battery cells 20b in the second battery cell group 200b, the plurality of second battery cells 20b in the second battery cell group 200b may be arranged in their thickness direction, in other words, the thickness direction of the plurality of second battery cells 20b may be parallel to the second direction y. Furthermore, in order to make the second wall 202b of the second battery cell 20b have the largest area, the second wall 202b of the second battery cell 20b may extend in a length direction of the second battery cell 20b, and accordingly, the first wall 201b interconnected therewith may likewise extend in the length direction of the second battery cell 20b.

It should be understood that in three-dimensional space, the size of the polyhedral structure in its length direction is larger than sizes of the polyhedral structure in other directions; in other words, the direction with the largest size in the battery cell of the polyhedral structure is its length direction. Correspondingly, the direction with the smallest size of the battery cell of the polyhedral structure is the thickness direction of the battery cell.

The first battery cells 20a and the second battery cells 20b shown in FIG. 4 and FIG. 5 may be referred to as blade battery cells or blade cells. A plurality of blade battery cells can be easily interconnected in their thickness direction and used as a battery cell group directly installed in the box 100 of the battery 10.

In some implementations, for example, as shown in FIG. 4 and FIG. 5, the first battery cell 20a and the second battery cell 20b may be battery cells having a same structure and same sizes, differing only in their arrangement direction in the box 100.

In this case, the first battery cell group 200a and the second battery cell group 200b can be conveniently formed, which also facilitates to fit and install the first battery cell group 200a and the second battery cell group 200b in the box 100.

Alternatively, in some other implementations, the first battery cell 20a and the second battery cell 20b may alternatively be battery cells having different structures and/or different sizes. For example, the size of the first battery cell 20a in its length direction is different from the size of the second battery cell 20b in its length direction. For example, the first battery cell 20a and the second battery cell 20b have different chemical systems. Optionally, the first battery cell 20a and the second battery cell 20b have different materials in electrical members.

In this case, the battery 10 may include battery cells having different structures and/or different sizes, and battery cells having different structures and/or different sizes may be flexibly designed depending on different application scenarios so as to adapt to the installation in the box 100. By taking into consideration the stiffness and strength, the advantages of such battery cells having different structures are combined so as to enhance the comprehensive performance of the battery 10 and make the battery 10 have a broader application prospect.

Optionally, on the basis of accommodating the first battery cell group 200a and the second battery cell group 200b in the box 100, the first battery cell group 200a and the second battery cell group 200b may be mutually attached and are accommodated as a common whole in the box 100.

Optionally, as shown in FIG. 4 and FIG. 5, the first battery cell group 200a and the second battery cell group 200b may be arranged in the second direction y, the second wall 202a of the at least one first battery cell 20a in the first battery cell group 200a is attached to the second wall 202b of the second battery cell 20b in the second battery cell group 200b that is adjacent to the first battery cell group 200a, so as to implement mutual attaching between the first battery cell group 200a and the second battery cell group 200b.

Based on the technical solution in this embodiment of this application, the first battery cell group 200a and the second battery cell group 200b are mutually attached to form a whole installed in the box 100, and as compared with the technical solutions in which the first battery cell group 200a and the second battery cell group 200b are spaced apart from each other, no filler needs to be provided between the first battery cell group 200a and the second battery cell group 200b, such that the overall energy density of the battery 10 can be improved and the weight of the battery 10 can be reduced.

In addition, in the first battery cell group 200a, the at least one first battery cell 20a has a large-area first wall 201a facing the first direction z instead of the second direction y, such that the at least one first battery cell 20a has a smaller degree of swelling on its second wall 202a facing the second direction y, and the first battery cell group 200a has high strength and stiffness in the second direction y. In this embodiment of this application, the first battery cell group 200a may serve as a support member located on one side of the second battery cell group 200b, and can form a support for the second battery cell group 200b in the second direction y and experience the stresses accumulated in the second direction y by the second wall 202b of the second battery cell 20b in the second battery cell group 200b, enhancing the overall stiffness and strength of the battery 10 in the second direction y.

Optionally, in this embodiment of this application, both the second wall 202b of the second battery cell 20b and the second wall 202a of the first battery cell 20a may extend in length directions of the respective battery cells, such that the second wall 202b of the second battery cell 20b and the second wall 202a of the first battery cell 20a both have a larger area. In addition, the length direction of the first battery cell 20a may be parallel to the length direction of the second battery cell 20b such that the second wall 202b of the second battery cell 20b and the second wall 202a of the first battery cell are mutually attached. In the embodiment shown in FIG. 4 and FIG. 5, the length direction of the second battery cell 20b and the length direction of the first battery cell 20a are both parallel to the direction x shown in the figures, where the direction x may be a third direction perpendicular to the first direction z and the second direction y.

Optionally, under the condition that the first battery cell group 200a and the second battery cell group 200b are arranged in the second direction y, a difference between the size of the first battery cell group 200a in the first direction z and the size of the second battery cell group 200b in the first direction z may fall in a predetermined range, and/or a difference between the size of the first battery cell group 200a in the third direction x and the size of the second battery cell group 200b in the third direction x may fall in a predetermined range.

As an example rather than a limitation, as shown in FIG. 5, the size of each of the at least one first battery cell 20a in the first battery cell group 200a in the first direction z is h, and therefore the size of the first battery cell group 200a in the first direction z is n×h, and the size of the second battery cell 20b in the first direction z is a size of the second battery cell group 200b in the first direction z, where such size is H. The absolute value of the difference between H and n×h is c. Optionally, 0 mm ≤ c ≤ 15 mm. Further, 0 mm ≤ c ≤ 5 mm.

Further, as an example rather than a limitation, a size of the first battery cell group 200a in the third direction x and a size of the second battery cell group 200b in the third direction x may be equal.

Based on this implementation, the overall shape formed by the first battery cell group 200a and the second battery cell group 200b can be made more regular, which facilitates the overall installation of the first battery cell group 200a and the second battery cell group 200b in the box 100 with a regular shape, reduces the installation space required for the first battery cell group 200a and the second battery cell group 200b, and increases the energy density of the battery 10.

It should be understood that when the first battery cell group 200a and the second battery cell group 200b are mutually attached, the second wall 202a of the at least one first battery cell 20a in the first battery cell group 200a may be coated with structural adhesive so as to facilitate interconnection with the second wall 202b of the second battery cell 20b in the second battery cell group 200b, such that the first battery cell group 200a and the second battery cell group 200b form a whole that is reliably connected.

The first battery cell group 200a and the second battery cell group 200b, in addition to being arranged in the second direction y, in other implementations, may alternatively be arranged in other directions. For example, the first battery cell group 200a and the second battery cell group 200b may alternatively be arranged in the first direction z. In this case, the first battery cell group 200a and the second battery cell group 200b are stacked in the first direction z. The first wall 201b of the at least one second battery cell 20b in the second battery cell group 200b may be mutually attached to the first wall 201a of the first battery cell 20a in the first battery cell group 200a adjacent to the second battery cell group 200b. For specific solutions for other arrangements of the first battery cell group 200a and the second battery cell group 200b, reference may be made to the related descriptions in the context, and details are not repeated herein.

Further, the embodiments shown in FIG. 4 and FIG. 5 schematically illustrate only a case in which the battery 10 includes one first battery cell group 200a and one second battery cell group 200b. Optionally, the battery 10 may alternatively include a plurality of first battery cell groups 200a and/or a plurality of second battery cell groups 200b. The plurality of first battery cell groups 200a and/or the plurality of second battery cell groups 200b may likewise be arranged in a second direction y.

Optionally, in the embodiments shown in FIG. 4 and FIG. 5, the first direction z may be parallel to the direction of gravity, and the second direction y may be parallel to the horizontal direction. In this case, the first battery cell group 200a and the second battery cell group 200b are arranged on the horizontal plane, which can further enhance the stability of the first battery cell group 200a and the second battery cell group 200b in the battery 10.

Under the condition that the first direction z is parallel to the direction of gravity, in the embodiments shown in FIG. 4 and FIG. 5, the first battery cell 20a and the second battery cell 20b are conventional prismatic battery cells. The second walls 202b of the plurality of second battery cells 20b in the second battery cell group 200b are disposed parallel to the first direction z and mutually attached. In this way, the second battery cells 20b can form the second battery cell group 200b as a whole, but there are no interaction forces between the second battery cells 20b in the first direction z, and if the battery 10 is impacted by an external force in the first direction z, the connection between the second battery cells 20b may be affected by the impact, which in turn may affect the overall stiffness and strength of the battery 10. Similarly, when the second wall 202a of the first battery cell 20a is disposed parallel to the first direction z and attached to the second wall 202b of the second battery cell 20b, the connection between the first battery cell 20a and the second battery cell 20b may also be affected by an external impact, which in turn may affect the overall stiffness and strength of the battery 10.

In view of this, the application provides a technical solutions in which the first battery cell 20a and/or the second battery cell 20b are designed as other polyhedral battery cells different from the conventional prismatic battery cells. Specifically, the first wall 201a of the first battery cell 20a is perpendicular to the first direction z, and the second wall 202a of the first battery cell 20a is inclined with respect to the first direction z; and/or the first wall 201b of the second battery cell 20b is disposed perpendicular to the first direction z, and the second wall 202b of the second battery cell 20b is inclined with respect to the first direction z.

Taking the first battery cell 20a as an example, the first wall 201a and the second wall 202a of the first battery cell 20a are interconnected to form a wedge-shaped structure. Specifically, the included angle between the first wall 201a and the second wall 202a may be acute to form a wedge-shaped structure with an acute angle.

Alternatively, the included angle between the first wall 201a and the second wall 202a of the first battery cell 20a may alternatively be an obtuse angle. In this case, it can also be understood that a wedge-shaped structure with an obtuse angle is formed between the first wall 201a and the second wall 202a.

Similarly, for the shapes of the first wall 201b and the second wall 202b in the second battery cell 20b, reference may be made to the related descriptions of the first battery cell 20a.

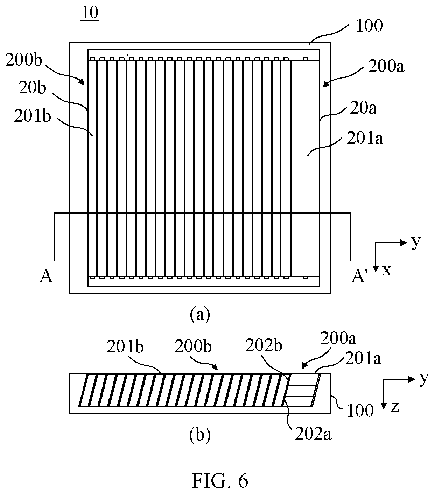

FIG. 6 shows schematic top and cross sectional views of a battery 10 according to an embodiment of this application. (a) of FIG. 6 is a schematic top view of the battery 10, and (b) of FIG. 6 is a schematic cross sectional view of the battery 10 along direction A-A' in (a).

Optionally, in this embodiment of this application, the first direction z is parallel to the direction of gravity. As shown in FIG. 6, in the second battery cell 20b, the first wall 201b is perpendicular to the first direction z, the second wall 202b is inclined with respect to the first direction z, and the second wall 202b is a wall with a largest area of the second battery cell 20b.

In addition, as shown in FIG. 6, the second direction y is perpendicular to the first direction z, that is, the second direction y is parallel to the horizontal direction. In the box 100 of the battery 10, when the plurality of second battery cells 20b are arranged in the second direction y to form the second battery cell group 200b, adjacent second battery cells 20b are mutually attached through adjacent second walls 202b, such that interaction forces in the first direction z are formed between the adjacent second walls 202b.

Based on the technical solutions in this embodiment of this application, in the second battery cell group 200b, the second walls 202b of adjacent second battery cells 20b are mutually attached and inclined with respect to the first direction z, that is, inclined with respect to the direction of gravity. Therefore, interaction forces parallel to the direction of gravity are formed between the adjacent second walls 202b, such that each of the second battery cells 20b has at least one inclined second wall 202b pressed by an inclined second wall 202b of the second battery cell 20b adjacent thereto. Interaction forces are formed between adjacent ones of the second battery cells 20b such that the two are mutually restrained and restricted, which can enhance the overall stiffness and strength of the battery 10 and reduce potential safety hazards caused by vibration and impact on the battery 10 during use.

In addition, in this embodiment of this application, the second wall 202b is the wall with a largest area of the second battery cell 20b, such that the second wall 202b with the largest area can be used for implementing attachment between the adjacent second battery cells 20b to the greatest extent, which increases the interaction forces between the adjacent second battery cells 20b, thereby enhancing the stability and overall stiffness and strength of the battery 10. Further, the second wall 202b may be coated with structural adhesive, and the adjacent ones of the second battery cells 20b may be interconnected by the structural adhesive, and compared to a vertically disposed wall, the area of the inclined second wall 202b is larger than the area of the vertically disposed wall, and thus the area of the structural adhesive applied on the second wall 202b is also larger, which can further enhance the stability and overall stiffness and strength of the battery 10.

Optionally, as shown in FIG. 6, in the first battery cell group 200a, at least one of the first battery cells 20a is stacked in the first direction z, namely, in the direction of gravity, and adjacent ones of the first battery cells 20a are mutually attached through adjacent first walls 201a. The second wall 202a of at least one of the first battery cells 20a in the first battery cell group 200a is inclined with respect to the first direction z.

In addition, as shown in FIG. 6, the first battery cell group 200a and the second battery cell group 200b may be arranged in the second direction y, and the first battery cell group 200a and the second battery cell group 200b are mutually attached through the inclined second walls 202a of the first battery cells 20a and the inclined second walls 202b of the second battery cells 20b, so as to generate interaction forces between the adjacent second walls 202a and the adjacent second walls 202b in the first direction z.

Based on the technical solution in this embodiment of this application, the second walls 202a and the second walls 202b mutually attached between the first battery cells 20a and the second battery cells 20b are inclined with respect to the first direction z, that is, inclined with respect to the direction of gravity, such that interaction forces parallel to the direction of gravity are formed between the adjacent second walls 202a and the adjacent second walls 202b, and such interaction forces may cause the first battery cell group 200a and the second battery cell group 200b to be mutually restrained and restricted, which can enhance the overall stiffness and strength of the battery 10 and reduce the potential safety hazards caused by the vibration and impact of the battery 10 during use. Further, the area of the inclined second wall 202a in the first battery cell 20a is larger than the area of the vertically disposed wall, and thus the area of the structural adhesive applied on the second wall 202a is also larger, which can further enhance the stability and overall stiffness and strength of the battery 10.

In an example, in the embodiment shown in FIG. 6, the battery 10 includes only one first battery cell group 200a, and it can be understood that the battery 10 may further include a plurality of first battery cell groups 200a, where the plurality of first battery cell groups 200a may likewise be arranged in the second direction y, adjacent two of the first battery cell groups 200a are mutually attached through second walls 202a, and interaction forces are formed between the adjacent second walls 202a in the first direction z.

Optionally, in the embodiment shown in FIG. 4 and FIG. 5, the first battery cell 20a may include two first walls 201a disposed in parallel and two second walls 202a disposed in parallel, where the first battery cell 20a has a rectangular cross section on a plane perpendicular to its first wall 201a and second wall 202a. In this implementation, the first battery cell 20a has a regular and symmetrical structure, which facilitates the manufacture and installation of the first battery cell 20a. Similarly, in the embodiments shown in FIG. 4 and FIG. 5, the second battery cell 20b has a rectangular cross section on a plane perpendicular to its first wall 201b and second wall 202b.

Optionally, in the embodiment shown in d FIG. 6, the first battery cell 20a may include two first walls 201a disposed in parallel and two second walls 202a disposed in parallel, where the first battery cell 20a has a parallelogram cross section on a plane perpendicular to its first wall 201a and second wall 202a. In this implementation, the first battery cell 20a has the two inclined second walls 202a and also has a more regular overall structure, which facilitates the mutual attachment of the plurality of first battery cells 20a so as to form a more regular first battery cell group 200a. Similarly, in the embodiment shown in FIG. 6, the second battery cell 20b has a parallelogram cross section on a plane perpendicular to its first wall 201b and second wall 202b.

Optionally, in some other implementations, the first battery cell 20a may include two first walls 201a disposed in parallel and two second walls 202a disposed in non-parallel, where the first battery cell 20a has a trapezoidal cross section on a plane perpendicular to the first wall 201a and the second wall 202a, and the two non-parallel second walls 202a form the waist of the trapezoidal cross section. Based on these implementations, the first battery cell 20a may likewise have two inclined second walls 202a. Similarly, the second battery cell 20b has a rectangular cross section on a plane perpendicular to its first wall 201b and second wall 202b.

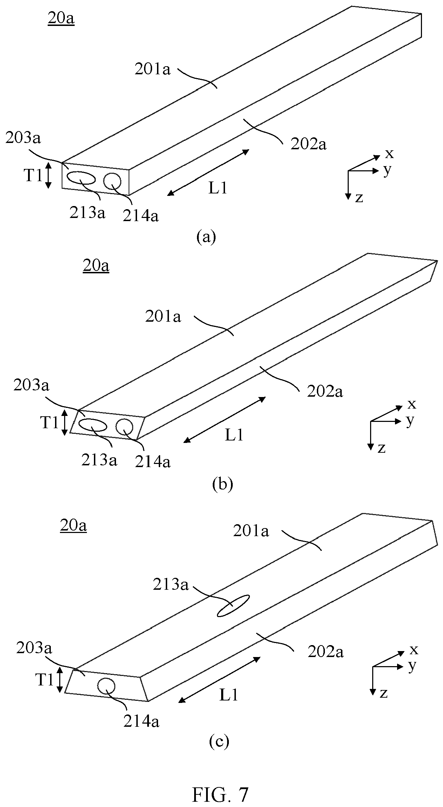

FIG. 7 is a three-dimensional schematic view of three types of first battery cells 20a according to an embodiment of this application. (a) of FIG. 7 may be an enlarged schematic view of the first battery cell 20a in FIG. 5, and (b) of FIG. 7 may be an enlarged schematic view of the first battery cell 20a in FIG. 6.

Optionally, as shown in FIG. 7, the first battery cell 20a may be a hexahedral structure, and the first battery cell 20a may include two first walls 201a disposed opposite each other, two second walls 202a disposed opposite each other, and two third walls 203a disposed opposite each other and connected to the first walls 201a and the second walls 202a.

Optionally, in the embodiment shown in FIG. 7, the third wall 203a may be perpendicular to the first wall 201a and the second wall 202a, such that the third wall 203a has the same shape as the cross section of the first battery cell 20a on the plane perpendicular to the first wall 201a and the second wall 202a. For example, the shape of the third wall 203a may be rectangular, as shown in (a) of FIG. 7, or the shape of the third wall 203a may be parallelogram, as shown in (b) of FIG. 7, or the shape of the third wall 203a may be trapezoid, as shown in (c) of FIG. 7.

Certainly, the third wall 203a may alternatively not be perpendicular to the first wall 201a and the second wall 202a. In this case, the shape of the third wall 203a may also be presented as parallelogram or trapezoid. Specific arrangement of the third wall 203a is not limited in this embodiment of this application.

Optionally, in the embodiment shown in FIG. 7, both the first wall 201a and the second wall 202a extend in the length direction L1 of the first battery cell 20a, where the length direction L1 of the first battery cell 20a is perpendicular to the first direction z and the second direction y, that is, the length direction L1 of the first battery cell 20a is parallel to the third direction x shown in FIG. 7.

Optionally, in the embodiment shown in FIG. 7, in order to achieve stacking of a plurality of first battery cells 20a in the first direction z, the thickness direction T1 of the first battery cells 20a may be parallel to the first direction z.

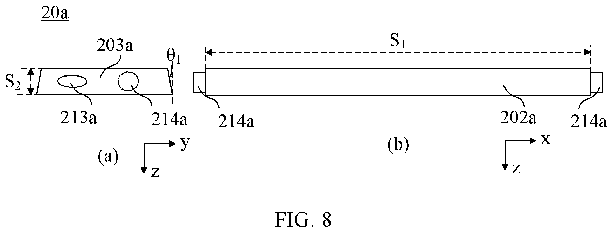

(a) of FIG. 8 is a front view of the first battery cell 20a shown in (b) of FIG. 7, and (b) of FIG. 8 is a side view of the first battery cell 20a shown in (b) of FIG. 7.

Optionally, as shown in FIG. 8, a first size of the first battery cell 20a in its length direction L1 may be represented by S1 and a second size in its thickness direction T1 may be represented by S2.

As an example rather than a limitation, the first size S1 may be in a range of 100 mm ≤ S1 ≤ 1400 mm. Further, the first size S1 may be in the range of 300mm ≤ S1 ≤ 1200mm.

As an example rather than a limitation, the second size S2 may be in the range of 5 mm ≤ S2 ≤ 80 mm. Further, the second size S2 may be in the range of 5 mm ≤ S2 ≤ 30 mm.

Optionally, as shown in FIG. 8, in the first battery cell 20a, the included angle between the second wall 202a and the first direction z may be represented by θ₁.

As an example rather than a limitation, the included angle θ₁ between the second wall 202a and the first direction z may be in the range of 0° < θ₁ ≤ 60°. Further, the included angle θ₁ between the second wall 202a and the first direction z may be in the range of 0° < θ₁ ≤ 10°.

In the technical solution in this embodiment of this application, controlling the included angle θ₁ between the second wall 202a in the first battery cell 20a and the first direction z can balance occupied space of the first battery cell 20a and the stability of the first battery cell 20a. With a smaller included angle θ₁, the lateral space occupied by the first battery cell 20a can be relatively decreased on the basis of ensuring the stability of the installation of the first battery cell 20a, thus increasing the energy density of the battery 10.

Still referring to FIG. 7 and FIG. 8, in the first battery cell 20a, its third wall 303a may be correspondingly located at an end of the first battery cell 20a in the length direction L1 and connected to the first wall 201a and the second wall 202a.

Optionally, the first battery cell 20a may further include electrode terminals 214a disposed on the third wall 303a. For the specific solutions of the electrode terminals 214a, reference may be made to the technical solutions related to the electrode terminals 214 in the embodiment shown in FIG. 3, and details are not repeated herein.

In an example, as shown in FIG. 7 and FIG. 8, the two electrode terminals 214a may be disposed on two sides of the first battery cell 20a in the length direction L1 of the first battery cell 20a, to be specific, the two electrode terminals 214a may be disposed at the two third walls 203a of the first battery cell 20a. In another example, the two electrode terminals 214a may alternatively be disposed on the same side of the first battery cell 20a in the length direction L1 of the first battery cell 20a, to be specific, the two electrode terminals 214a may be disposed at the same third wall 203a of the first battery cell 20a.

Based on the technical solution in this embodiment of this application, the electrode terminals 214a of the first battery cell 20a are disposed on the third wall 203a located at the end of the first battery cell 20a in the length direction L1 of the first battery cell 20a, without affecting attachment of the first wall 201a and the second wall 202a of the first battery cell 20a to other members, where the first wall 201a and the second wall 202a extend in the length direction L1 of the first battery cell 20a and have a larger area. This ensures better stability of the first battery cell 20a. In addition, based on actual design requirements, the electrode terminals 214a may be disposed on the same end surface or different end surfaces of the first battery cell 20a, such that the first battery cell 20a can be flexibly applied to various electrical environments.

Optionally, still referring to FIG. 7 and FIG. 8, the first battery cell 20a may further include a pressure relief mechanism 213a, where the pressure relief mechanism 213a may be disposed on a wall other than the second wall 202a in the first battery cell 20a, to be specific, the first wall 201a or the third wall 203a.

For example, in the implementation shown in (a) and (b) of FIG. 7, the pressure relief mechanism 213a is disposed on the third wall 203a located at the end of the first battery cell 20a in the length direction L1. Optionally, the pressure relief mechanism 213a may be disposed on the same third wall 203 as the electrode terminals 214a, for example, the pressure relief mechanism 213a may be disposed on a side of one electrode terminal 214a.

Alternatively, in the implementation shown in (c) of FIG. 7, the pressure relief mechanism 213a is disposed on the first wall 201a located at the top or bottom of the first battery cell 20a. In this implementation, the first battery cell 20a is connected to another battery cell through the second walls 202a, and the pressure relief mechanism 213a and the electrode terminals 214a are located at different walls of the first battery cell 20a, which can prevent the pressure relief mechanism 213a in releasing emissions inside the battery cell group from affecting the electrode terminals 214a, thereby enhancing the safety performance of the first battery cell 20a.

It should be noted that the position of the pressure relief mechanism 213a in each of the figures of FIG. 7 is used as an example rather than a limitation, and in the figures (a) and (b) of FIG. 7, the pressure relief mechanism 213a may alternatively be disposed on the first wall 201a located on the top or bottom surface of the first battery cell 20a. In (c) of FIG. 7, the pressure relief mechanism 213a may alternatively be disposed on the third wall 203a located at an end surface of the first battery cell 20a.

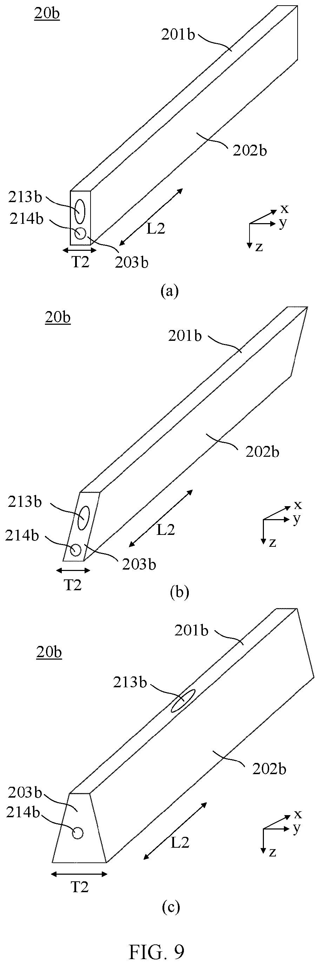

FIG. 9 shows three-dimensional schematic views of three types of second battery cells 20b according to an embodiment of this application. (a) of FIG. 9 may be an enlarged schematic view of the second battery cell 20b in FIG. 5, and (b) of FIG. 9 may be an enlarged schematic view of the second battery cell 20b in FIG. 6.

Optionally, as shown in FIG. 9, the second battery cell 20b may be a hexahedral structure, and the second battery cell 20b may include two first walls 201b disposed opposite each other, two second walls 202b disposed opposite each other, and two third walls 203b disposed opposite each other and connected to the first walls 201b and the second walls 202b.

Optionally, in the embodiment shown in FIG. 9, the third wall 203b may be perpendicular to the first wall 201b and the second wall 202b, such that the third wall 203b has the same shape as the cross section of the second battery cell 20b on a plane perpendicular to the first wall 201b and the second wall 202b. For example, the shape of the third wall 203b may be rectangular, as shown in (a) of FIG. 9, or the shape of the third wall 203b may be parallelogram, as shown in (b) of FIG. 9, or the shape of the third wall 203b may be trapezoid, as shown in (c) in FIG. 9.

Optionally, in the embodiment shown in FIG. 9, both the first wall 201b and the second wall 202b extend in the length direction L2 of the second battery cell 20b.

Optionally, in the embodiment shown in FIG. 9, in order to implement arrangement of the plurality of second battery cells 20b in the second direction y, the thickness direction T2 of the second battery cell 20b may be parallel to the second direction y.

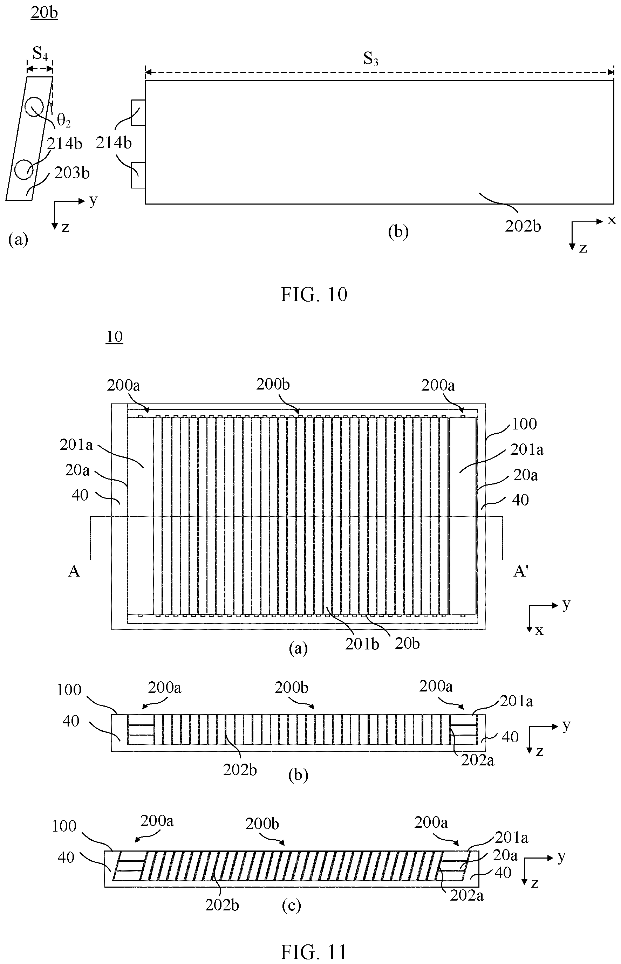

(a) of FIG. 10 shows a front view of the second battery cell 20b shown in (b) of FIG. 9, and (b) of FIG. 10 shows a side view of the second battery cell 20b shown in (b) of FIG. 9.

Optionally, as shown in FIG. 10, a third size of the second battery cell 20b in its length direction L2 may be represented by S3 and a fourth size in its thickness direction T2 may be represented by S4.

As an example rather than a limitation, the third size S3 may be in a range of 100 mm ≤ S3 ≤ 1400 mm. Further, the third size S3 may be in the range of 300 mm ≤ S3 ≤ 1200 mm.

As an example rather than a limitation, the fourth size S4 may be in the range of 5 mm ≤ S4 ≤ 80 mm. Further, the fourth size S4 may be in the range of 5 mm ≤ S4 ≤30 mm.

Optionally, as shown in FIG. 10, in the second battery cell 20b, the included angle between the second wall 202b and the first direction z may be represented by θ₂.

As an example rather than a limitation, the included angle θ₂ between the second wall 202b and the first direction z may be in the range of 0° < θ₂ ≤ 60°. Further, the included angle θ₂ between the second wall 202b and the first direction z may be in the range of 0° < θ₂ ≤ 10°.

It can be seen from the foregoing descriptions that the second battery cell 20b may have the same or similar shape and sizes as the first battery cell 20a, the difference being that the thickness direction T2 of the second battery cell 20b is different from the thickness direction T1 of the first battery cell 20a.

Optionally, the second battery cell 20b may further include electrode terminals 214b and a pressure relief mechanism 213b. Specifically, for the technical solutions related to the electrode terminals 214b and the pressure relief mechanism 213b, reference may be made to the technical solutions related to the electrode terminals 214a and the pressure relief mechanism 214b in the first battery cell 20a, and details are not repeated herein.

The first battery cell 20a and the second battery cell 20b in this embodiment of this application are described above with reference to FIG. 7 to FIG. 10, and the arrangement of the first battery cell group 200a formed by at least one first battery cell 20a and the second battery cell group 200b formed by at least one second battery cell 20b in the box 100 of the battery 10 of this embodiment of this application is described below with reference to FIG. 11 to FIG. 14.

FIG. 11 shows schematic top and cross sectional views of a battery 10 according to an embodiment of this application. (a) of FIG. 11 shows a schematic top view of the battery 10, (b) of FIG. 11 shows a schematic cross sectional view of the battery 10 along direction A-A' in (a), and (c) of FIG. 11 shows another schematic cross sectional view of the battery 10 along direction A-A' in (a).

As shown in FIG. 11, the battery 10 may include two first battery cell groups 200a and one second battery cell group 200b that are arranged in a second direction y, and in the second direction y, the two first battery cell groups 200a are located at two ends of the one second battery cell group 200b, respectively.

Optionally, in this embodiment of this application, the second battery cell group 200b may include a plurality of second battery cell 20b, where second walls 202b of the plurality of second battery cells 20b are mutually attached to form a whole.

In addition, two first battery cell groups 200a may be disposed at two ends of the second battery cell groups 200b in the second direction y, respectively, and the second wall 202a of at least one of the first battery cells 20a in each of the first battery cell groups 200a is attached to the second wall 202b of the second battery cell 20b adjacent thereto.

Based on the technical solutions in this implementation, the first battery cell group 200a is disposed on each of two sides of the second battery cell group 200b in the second direction y. In the first battery cell group 200a, the at least one first battery cell 20a has a large-area first wall 201a facing the first direction z instead of the second direction y, such that the at least one first battery cell 20a has a smaller degree of swelling on its second wall 202a facing the second direction y, and the first battery cell group 200a has higher strength and stiffness in the second direction y. In this embodiment of this application, the first battery cell groups 200a may serve as end plates located on two side of the second battery cell group 200b, and can form a support for the second battery cell group 200b in the second direction y and experience the stresses accumulated in the second direction y by the second wall 202b of the second battery cell 20b in the second battery cell group 200b, enhancing the overall stiffness and strength of the battery 10 in the second direction y.

Optionally, as shown in (c) of FIG. 11, the second walls 202b of the plurality of second battery cells 20b in the second battery cell group 200b may be inclined with respect to the first direction z, such that the second walls 202b of adjacent ones of the second battery cells 20b generate interaction forces therebetween in the first direction z, enhancing the stiffness and strength of the second battery cells 200b in the first direction z.

In order to make the second wall 202a of the at least one first battery cell 20a in the first battery cell group 200a attach to the inclined second wall 202b of the second battery cell 20b, the second wall 202 of the at least one first battery cell 20a in the first battery cell group 200a is likewise inclined with respect to the first direction z. The second wall 202 of the at least one first battery cell 20a on the same side may be located on the same plane, and the second wall 202a of the at least one first battery cell 20a is configured to jointly form the second wall of the first battery cell group 200a.

Based on the technical solutions in this implementation, the first battery cell group 200a plays the role of an end plate to form a support for the second battery cell group 200b in the second direction y, and in addition, the first battery cell group 200a and the second battery cell group 200b may generate interaction forces therebetween in the first direction z, such that the first battery cell group 200a and the second battery cell group 200b can be mutually restrained and restricted, further enhancing the overall stiffness and strength of the battery 10 and reducing the potential safety hazards caused by vibration and impact of the battery 10 during use.

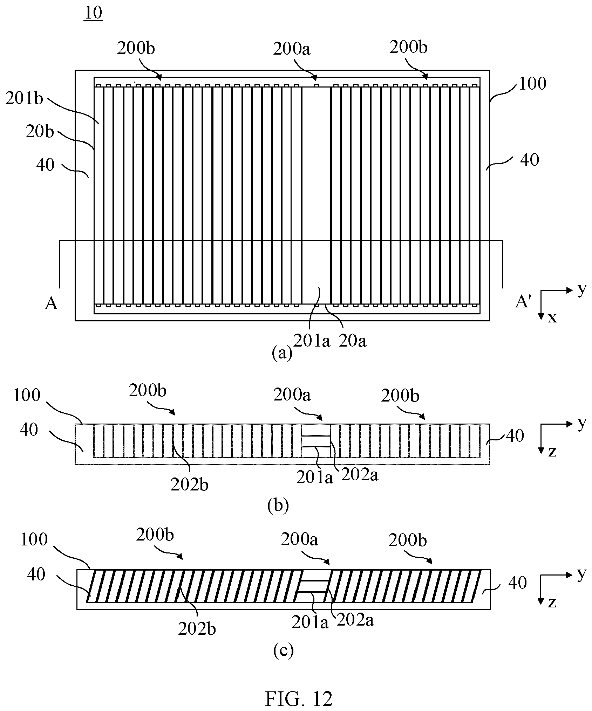

FIG. 12 shows schematic top and cross sectional views of a battery 10 according to an embodiment of this application. (a) of FIG. 12 shows a schematic top view of the battery 10, (b) of FIG. 12 shows a schematic cross sectional view of the battery 10 along direction A-A' in (a), and (c) of FIG. 12 shows another schematic cross sectional view of the battery 10 along direction A-A' in (a).

As shown in FIG. 12, in this embodiment of this application, the battery 10 may include one first battery cell group 200a and two second battery cell groups 200b that are arranged in a second direction y, and in the second direction y, the two second battery cell groups 200b are located at two ends of the one first battery cell group 200a, respectively.

Optionally, in this embodiment of this application, each of the second battery cell groups 200b may include a plurality of second battery cell 20b, where second walls 202b of the plurality of second battery cells 20b are mutually attached to form a whole.

Alternatively, the two second battery cell groups 200b may be disposed at two ends of the first battery cell group 200a in the second direction y, respectively, and the second wall 202b of one of the second battery cells 20b in each of the second battery cell groups 200b adjacent to the first battery cell group 200a is attached to a second wall 202a of at least one of first battery cells 20a in the first battery cell group 200a.

Based on the technical solutions in this implementation, on the one hand, the first battery cell group 200a may serve as a beam between the two second battery cell groups 200b, and can form a support in the second direction y for the second battery cell groups 200b on the two sides and experience the stresses accumulated in the second direction y by the second wall 202b of the second battery cell 20b in the second battery cell group 200b, enhancing the overall stiffness and strength of the battery 10 in the second direction y. On the other hand, the plurality of second battery cells 20b in the second battery cell group 200b are mutually attached through second walls 202b with the largest area thereof, such that the heat generated by the plurality of second battery cells 20b can be transferred within the entire second battery cell group 200b through the second walls 202b. In contrast, the second wall 202a of the at least one first battery cell 20a in the first battery cell group 200a that faces towards the second direction y is not a wall with the largest area of the first battery cell 20a, and the second wall 202a of the first battery cell 20a has a more limited heat conductivity. Therefore, the first battery cell group 200a can serve as a thermal barrier so as to reduce the heat transfer between the second battery cell groups 200b on the two sides of the first battery cell group 200a. If thermal runaway occurs in a second battery cell 20b in the second battery cell groups 200b, only other second battery cells 20b in the second battery cell group 200b to which the second battery cell 20b belongs are affected, while the impact on the first battery cell group 200a and other second battery cell groups 200b is smaller, thereby enhancing the overall safety performance of the battery 10.

Optionally, as shown in (c) of FIG. 12, the second walls 202b of the plurality of second battery cells 20b in the second battery cell group 200b may be inclined with respect to the first direction z, such that the second walls 202b of adjacent ones of the second battery cells 20b generate interaction forces therebetween in the first direction z, enhancing the stiffness and strength of the second battery cells 200b in the first direction z.

Optionally, the second wall 202a of the at least one first battery cell 20a in the first battery cell group 200a is likewise inclined with respect to the first direction z. The second wall 202a of the at least one first battery cell 20a on the same side may be located on the same plane, and the second wall 202a of the at least one first battery cell 20a is configured to jointly form the second wall of the first battery cell group 200a, so as to attach to the second wall 202b of the second battery cell 20b adjacent thereto

Based on the technical solutions in this implementation, the first battery cell group 200a plays the role of a beam to form a support for the second battery cell group 200b in the second direction y, and in addition, the first battery cell group 200a and the second battery cell group 200b may generate interaction forces therebetween in the first direction z, such that the first battery cell group 200a and the second battery cell group 200b can be mutually restrained and restricted, further enhancing the overall stiffness and strength of the battery 10 and reducing the potential safety hazards caused by vibration and impact of the battery 10 during use.

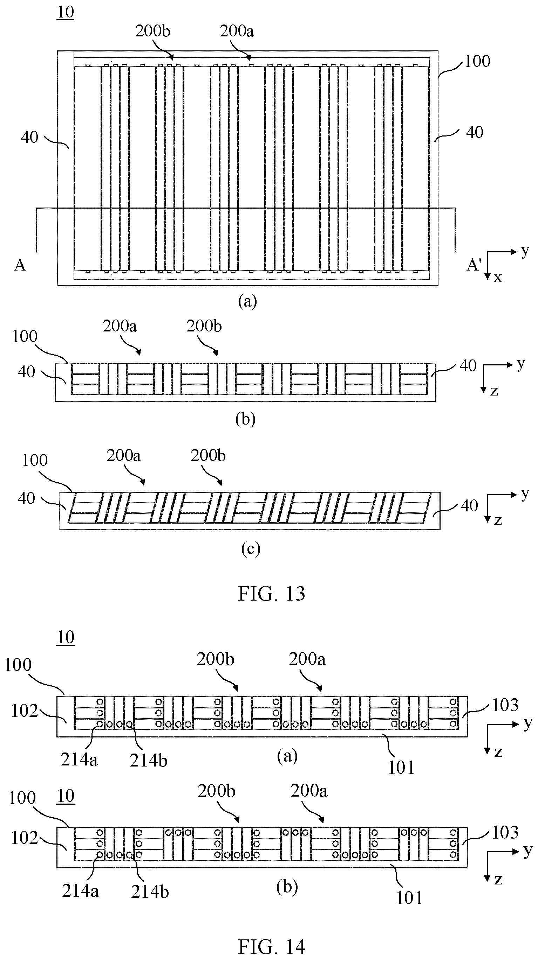

FIG. 13 shows schematic top and cross sectional views of a battery 10 according to an embodiment of this application. (a) of FIG. 13 shows a schematic top view of the battery 10, (b) of FIG. 13 shows a schematic cross sectional view of the battery 10 along direction A-A' in (a), and (c) of FIG. 13 shows another schematic cross sectional view of the battery 10 along direction A-A' in (a).

As shown in FIG. 13, in this embodiment of this application, the battery 10 may include a plurality of first battery cell groups 200a and a plurality of second battery cell groups 200b that are arranged in a second direction y, and in the second direction y, the plurality of first battery cell groups 200a and the plurality of second battery cell groups 200b are alternately arranged.

Specifically, in this embodiment of this application, one second battery cell group 200b is disposed between each two of the first battery cell groups 200a in the second direction y, and one first battery cell group 200a is disposed between each two of the second battery cell groups 200b, so as to implement alternate arrangement of the plurality of first battery cell groups 200a and the plurality of second battery cell groups 200b in the second direction y.

Based on the technical solution in this embodiment of this application, the plurality of first battery cell groups 200a and the plurality of second battery cell groups 200b are arranged alternately in the second direction y, and the plurality of first battery cell groups 200a can serve as a beam between the plurality of second battery cell groups 200b and can play a good supporting role for the plurality of second battery cell groups 200b, enhancing the stiffness and strength of the battery 10 in the second direction y to a greater extent.

Optionally, in the embodiment shown in FIG. 13, all of the first battery cell groups 200a may have the same the number of first battery cells 20a, and/or all of the second battery cell groups 200b may have a same number of second battery cells 20b.

Based on the technical solutions of this embodiment, all the first battery cell groups 200a in the battery 10 may have a same size, and/or all the second battery cell groups 200b have a same size. The plurality of first battery cell groups 200a having a same size may be uniformly distributed among the second battery cell groups 200b, and similarly, the plurality of second battery cell groups 200b having a same size may be uniformly distributed among the first battery cell groups 200a, such that the battery 10 has a more uniform and symmetrical internal structure, which is conducive to enhancing the stability of the battery 10.

Optionally, as shown in (c) of FIG. 13, in the second battery cell group 200b, the second walls 202b of the plurality of second battery cells 20b may be inclined with respect to the first direction z, and the second walls 202a of the plurality of first battery cells 20a in the first battery cell group 200a are likewise inclined with respect to the first direction z.

Based on the technical solutions in this implementation, the plurality of first battery cell groups 200a play the role of a beam to form a support for the plurality of second battery cell groups 200b in the second direction y, and in addition, the first battery cell group 200a and the second battery cell group 200b that are adjacent may generate interaction forces therebetween in the first direction z, such that the first battery cell group 200a and the second battery cell group 200b can be mutually restrained and restricted, further enhancing the overall stiffness and strength of the battery 10 and reducing the potential safety hazards caused by vibration and impact of the battery 10 during use.

Optionally, as shown in FIG. 11 to FIG. 13, in order to ensure the stability of the installation of the first battery cell groups 200a and the second battery cell groups 200b in the box 100, the battery 10 may further include an end plate 40 disposed at least one end of a whole jointly formed by the first battery cell group 200a and the second battery cell group 200b in the second direction y. Optionally, in some implementations, the end plate 40 may be a side wall of the box 100 in the second direction y.

Specifically, as shown in (c)s of FIG. 11 to of FIG. 13, if the second wall 202a of the first battery cell 20a or the second wall 202b of the second battery cell 20b is a wall inclined with respect to the first direction z, the end plate 40 may have a wall inclined with respect to the first direction z so as to adapt to the second wall 202a of the first battery cell 20a or the second wall 202b of the second battery cell 20b, where the inclined wall is configured to attach to the second wall 202a of the first battery cell 20a or the second wall 202b of the second battery cell 20b.

In an example, as shown in (c)s of FIG. 11 to FIG. 13, the end plate 40 is provided at each of two ends of the integrated structure jointly formed by the first battery cell group 200a and the second battery cell group 200b in the second direction y so as to secure and restrain the integrated structure jointly formed by the first battery cell group 200a and the second battery cell group 200b in the second direction y. Optionally, as shown in (a)s of FIG. 11 to FIG. 13, the end plate 40 may extend in the length direction (which also is the third direction x in the figures) of the first battery cell 20a and the second battery cell 20b to sufficiently attach to the first battery cell group 200a or the second battery cell group 200b and to support the first battery cell group 200a or the second battery cell group 200b.

As shown in (c)s of FIG. 11 to FIG. 13, the cross section of the end plate 40 may be right trapezoid, where one of end surfaces of the end plate 40 is configured to adapt to the second wall 202a of the first battery cell 20a or the second wall 202b of the second battery cell 20b, and the other end surfaces are parallel or perpendicular to the horizontal plane, which can be better adapted for installation in the box 100 of a regular shape such as a hollow rectangular structure, and improve the stability of installation of the end plate 40 and its attached first battery cell group 200a or second battery cell group 200b in the box 100. In addition, a local region of the end plate 40 of this structure has a larger thickness in the second direction y, and thus the local region has higher stiffness and strength in the second direction y, enhancing the overall stiffness, strength, and stability of the battery 10.

Specifically, as shown in (b)s of FIG. 11 to FIG. 13, if the second wall 202a of the first battery cell 20a or the second wall 202b of the second battery cell 20b is parallel to the first direction z, the end plate 40 may also be a conventional rectangular plate-like structure to attach to the second wall 202a of the first battery cell 20a or the second wall 202b of the second battery cell 20b.

Certainly, FIG. 11 to FIG. 13 only schematically illustrate several schematic structural views of the end plate 40 according to this embodiment of this application, the end plate 40 may be other shapes than those shown in the foregoing embodiments, the end plate 40 may not be attached to the second wall 202a of the first battery cell 20a or the second wall 202b of the second battery cell 20b, and a gap between the end plate 40 and the first battery cell 20a or the second battery cell 20b may be filled by structural adhesive or other related members.

It can be understood that in the embodiments shown in FIG. 11 to FIG. 13, as an example rather than a limitation, the third wall 203a of the first battery cell 20a and the third wall 203b of the second battery cell 20b are rectangular or parallelogram. In other embodiments, the third wall 203a of the first battery cell 20a and/or the third wall 203b of the second battery cell 20b may alternatively be trapezoid.

It can also be understood that the arrangements of the first battery cell group 200a and the second battery cell group 200b in the box 100 in the embodiments of this application are illustrated above in FIG. 11 to FIG. 13 only as examples. In addition to the foregoing arrangements, the first battery cell group 200a and the second battery cell group 200b may also be disposed together in the box 100 in other ways. For example, a plurality of first battery cell groups 200a are arranged adjacent to each other in the second direction y, may be spaced from each other between two second battery cell groups 200b, or are disposed on one side of the second battery cell group 200b; and so on. This embodiment of this application does not impose a limitation on the arrangements and the numbers of first battery cell groups 200a and second battery cell groups 200b in the box 100.

In the foregoing embodiment, as an example rather than a limitation, the number n1 of the first battery cells 20a in the first battery cell group 200a may be in the range of 1 ≤ n1 ≤ 6. Further, 2 ≤ n1 ≤ 4.

As an example rather than a limitation, the number n2 of the second battery cells 20b in the second battery cell group 200b may be in the range of n2 ≥ 1. Further, 1 ≤ n2 ≤ 6.

Optionally, the number of the first battery cells 20a in the first battery cell group 200a may be less than or equal to the number of the second battery cells 20b in the second battery cell group 200b.

Based on this implementation, the number of second battery cells 20b in the second battery cell group 200b that are arranged in the second direction y may be larger, and relatively, the number of first battery cells 20a in the first battery cell group 200a that are arranged in the first direction z may be smaller. The first battery cell group 200a supports the second battery cell group 200b, enhancing the stiffness and strength of the entire battery 10 in the second direction y, and in addition, the first battery cell group 200a itself may have low degree of swelling in the first direction z, thereby enhancing the stiffness and strength of the battery 10 in the first direction z and improving the safety performance of the battery 10.

Optionally, in order to further reduce the impact of the swelling of the first battery cell group 200a on the battery 10, the first battery cells 20a in the first battery cell group 200a may be low-swelling battery cells. Specifically, the first battery cell 20a has a low swelling coefficient, and during operation, the first battery cell 20a after swelling changes less in volume compared to it in the initial state. Optionally, the swelling coefficient of the first battery cell 20a may be lower than a swelling coefficient of the second battery cell 20b. Under the same operating conditions, the volume of the first battery cell 20a swells less than the volume of the second battery cell 20b.

Optionally, in order to enhance the safety of the first battery cell group 200a such that the first battery cell group 200a can play a good and stable support role between the second battery cell groups 200b, the first battery cell 20a in the first battery cell group 200a may be a high-safety battery cell group. Specifically, the first battery cell 20a generates less heat during operation, and the temperature of the emissions discharged through the pressure relief mechanism 213a is lower when the pressure relief mechanism 213a is actuated. Optionally, the energy density of the first battery cell 20a may be lower than the energy density of the second battery cell 20b. Optionally, the temperature of emissions discharged from the first battery cell 20a through the pressure relief mechanism 213a may be lower than the temperature of emissions discharged from the second battery cell 20b through the pressure relief mechanism 213b.

Optionally, to facilitate electrical connection between the first battery cell group 200a and the second battery cell group 200b, the electrode terminals 214a of at least one of the first battery cells 20a in the first battery cell group 200a may be located on the third wall 203a of the at least one first battery cell 20a. Similarly, the electrode terminals 214b of at least one of the second battery cells 20b in the second battery cell group 200b may be located on the third wall 203b of the at least one second battery cell 20b.

FIG. 14 shows two schematic side views of a battery 10 according to an embodiment of this application.

Optionally, as shown in FIG. 14, electrode terminals 214a of at least one of first battery cells 20a in a first battery cell group 200a may be arranged in a first direction z such that the electrode terminals 214a of the at least one first battery cell 20a are electrically connected to each other by a shorter busbar. Similarly, electrode terminals 214b of at least one of second battery cells 20b in a second battery cell group 200b may be arranged in a second direction y such that the electrode terminals 214b of the plurality of second battery cells 20b are electrically connected to each other by shorter busbars, thereby facilitating the arrangement and installation of the busbars in a box 100 of the battery 10.

Optionally, in a first battery cell group 200a and a second battery cell group 200b that are adjacent, electrode terminals 213a of at least one of first battery cells 20a in the first battery cell group 200a are disposed close to the second battery cell group 200b, which can facilitate the electrical connection of the first battery cell group 200a and the second battery cell group 200b by a shorter busbar, and can further facilitate the arrangement and installation of the busbar in the box 100 of the battery 10.

Optionally, as shown in FIG. 14, in the first direction z, the box 100 of the battery 10 may include an upper cover (not shown in the figure) and a bottom plate 101, and in the second direction y, the box 100 may include a first side wall 102 and a second side wall 103, where the first battery cell group 200a and the second battery cell group 200b are spaced apart in the second direction y. The electrode terminals 214a of the first battery cells 20a in the first battery cell group 200a are disposed near the first side wall 102 or the second side wall 103, and the electrode terminals 214b of the second battery cells 20b in the second battery cell group 200b are disposed near the top cover or the bottom plate 101.

Based on the technical solutions in these implementations, the electrode terminals 214a of the first battery cells 20a in the first battery cell group 200a are disposed close to the first side wall 102 or the second side wall 103 in the second direction y, such that the electrode terminals 214a of the first battery cells 20a in the first battery cell group 200a can be made close to the second battery cell group 200b adjacent to the first battery cell group 200a, and in the first direction, the electrode terminals 214b of the second battery cells 20b in the second battery cell group 200b are disposed close to the top cover or the bottom plate 101, such that the electrode terminals 214b of the second battery cells 20b in the second battery cell group 200b can be adjacent to the electrode terminals 214a of the first battery cells 20a in the first battery cell group 200a that are near the top cover or bottom plate 101. In this way, the busbars for connecting the first battery cell group 200a and the second battery cell group 200b that are adjacent are relatively short, which further facilitates the arrangement and installation of the busbars in the box 100 of the battery 10 and optimizes the overall performance of the battery 10.

In an example, the electrode terminals 214a of the plurality of first battery cells 20a in the battery 10 all face towards the same side wall of the box 100 in the second direction y. For example, as shown in (a) of FIG. 14, the electrode terminals 214a of the plurality of first battery cells 20a all face toward the second sidewall 103 of the box 100. Alternatively, the electrode terminals 214b of the plurality of second battery cells 20b in the battery 10 may all face towards the same wall of the box 100 in the first direction z. For example, as shown in (a) of FIG. 14, the electrode terminals 214b of the plurality of second battery cells 20b all face toward the bottom plate 101 of the box 100.

In another example, the electrode terminals 214a of the first battery cells 20a in the adjacent first battery cell group 200a are disposed close to each other or away from each other. For example, as shown in (b) of FIG. 14, the electrode terminals 214a of the first battery cells 20a in one of two adjacent first battery cell groups 200a may be disposed close to the first sidewall 102 and the electrode terminals 214a of the first battery cells 20a in the other first battery cell group 200a may be disposed close to the second sidewall 103, such that the electrode terminals 214a of the first battery cells 20a in adjacent first battery cell groups 200a are disposed close to each other or away from each other. Further, as shown in (b) of FIG. 14, the electrode terminals 214b of the second battery cells 20b in one of two adjacent second battery cell groups 200b may be disposed close to the top cover of the box 100, and the electrode terminals 214b of the second battery cells 20b in the other second battery cell group 200b may be disposed close to the bottom plate 101 of the box 100. The solutions in this implementation allow the wiring of the busbars of any first battery cell group 200a and any second battery cell group 200b in the battery 10 that are adjacent to be shorter, thereby allowing further optimization of the overall performance of the battery 10.

Optionally, as an example rather than a limitation, only one electrode terminal 214a is provided on one third wall 203a of the first battery cell 20a in FIG. 14, and/or only one electrode terminal 214b is also provided on one third wall 203b of the second battery cell 20b. Optionally, two electrode terminals 214a are provided on one third wall 203a of the first battery cell 20a, and/or two electrode terminals 214b are also provided on one third wall 203b of the second battery cell 20b.

In addition, FIG. 14 only schematically shows a schematic diagram of the electrode terminals of the first battery cell group 200a and the second battery cell group 200b shown in (b) of FIG. 13. For the electrode terminals of the first battery cell group 200a and the second battery cell group 200b in other arrangements, reference may be made to the related descriptions of the foregoing embodiments, and details are not repeated herein.

An embodiment of this application further provides an electric apparatus, where the electric apparatus may include the battery 10 in the foregoing embodiments, and the battery 10 is configured to supply electrical energy to the electric apparatus.

Optionally, the electric device may be a vehicle 1, a ship, or a spacecraft.

The foregoing describes the battery 10 and the electric apparatus in the embodiments of this application; and the following describes a method and device for manufacturing battery in the embodiments of this application. For those not described in detail, refer to the foregoing embodiments.

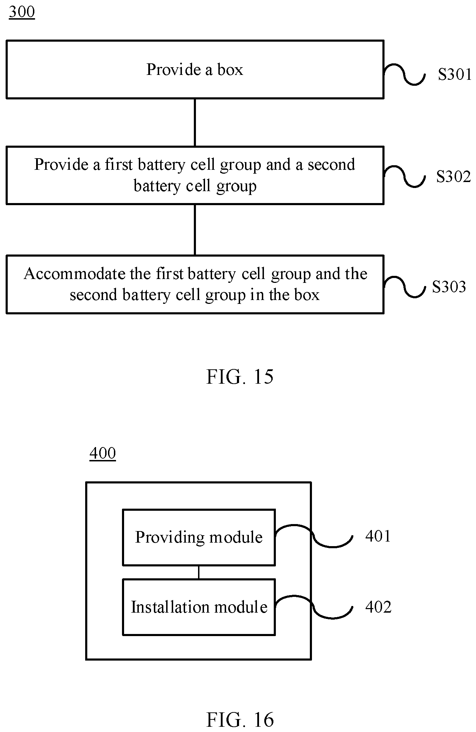

FIG. 15 is a schematic flowchart of a method 300 for preparing a battery according to an embodiment of this application. As shown in FIG. 15, the method 300 may include the following steps.

S301. Provide a box 100.

S302. Providing a first battery cell group 200a and a second battery cell group 200b, where the first battery cell group 200a includes at least one first battery cell 20a, the second battery cell group 200b includes at least one second battery cell 20b, the first battery cell 20a and the second battery cell 20b are polyhedral structures, a wall with a largest area of the first battery cell 20a serves as a first wall 201a of the first battery cell 20a, a wall with a largest area of the second battery cell 20b serves as a second wall 202b of the second battery cell 20b, the at least one first battery cell 20a in the first battery cell group 200a is arranged in a first direction z, adjacent ones of the at least one first battery cell 20a are mutually attached through first walls 201a thereof, the at least one second battery cell 20b in the second battery cell group 200b is arranged in a second direction y, adjacent ones of the at least one second battery cell 20b are mutually attached through second walls 202b thereof, and the first direction z is perpendicular to the second direction y.

S303. Accommodate the first battery cell group 200a and the second battery cell group 200b in the box 100.

FIG. 16 is a schematic block diagram of an apparatus 400 for preparing a battery according to an embodiment of this application. As shown in FIG. 16, the apparatus 400 for preparing a battery may include a providing module 401 and an installation module 402.

The providing module 401 is configured to provide a box 100, and provide a first battery cell group 200a and a second battery cell group 200b, where the first battery cell group 200a includes at least one first battery cell 20a, the second battery cell group 200b includes at least one second battery cell 20b, the first battery cell 20a and the second battery cell 20b are polyhedral structures, a wall with a largest area of the first battery cell 20a serves as a first wall 201a of the first battery cell 20a, a wall with a largest area of the second battery cell 20b serves as a second wall 202b of the second battery cell 20b, the at least one first battery cell 20a in the first battery cell group 200a is arranged in a first direction z, adjacent ones of the at least one first battery cell 20a are mutually attached through first walls 201a thereof, the at least one second battery cell 20b in the second battery cell group 200b is arranged in a second direction y, adjacent ones of the at least one second battery cell 20b are mutually attached through second walls 202b thereof, and the first direction z is perpendicular to the second direction y.

The installation module 402 is configured to accommodate the first battery cell group 200a and the second battery cell group 200b in the box 100.

Although this application has been described with reference to some preferred embodiments, various modifications can be made to this application and components in this application can be replaced with equivalents, without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery (10), **characterized by** comprising:
a box (100); and
a first battery cell group (200a) and a second battery cell group (200b) that are accommodated in the box (100), wherein the first battery cell group (200a) comprises at least one first battery cell (20a), the second battery cell group (200b) comprises at least one second battery cell (20b), the first battery cell (20a) and the second battery cell (20b) are polyhedral structures, a wall with a largest area of the first battery cell (20a) serves as a first wall (201a) of the first battery cell (20a), and a wall with a largest area of the second battery cell (20b) serves as a second wall (202b) of the second battery cell (20b); and
the at least one first battery cell (20a) in the first battery cell group (200a) is arranged in a first direction (z), adjacent ones of the at least one first battery cell (20a) are mutually attached through first walls (201a) thereof, the at least one second battery cell (20b) in the second battery cell group (200b) is arranged in a second direction (y), adjacent ones of the at least one second battery cell (20b) are mutually attached through second walls (202b) thereof, and the first direction (z) is perpendicular to the second direction (y).

2. The battery (10) according to claim 1, **characterized in that** the first battery cell group (200a) and the second battery cell group (200b) are arranged in the second direction (y), a second wall (202a) of the at least one first battery cell (20a) in the first battery cell group (200a) is attached to the second wall (202b) of the second battery cell (20b) in the second battery cell group (200b) adjacent to the first battery cell group (200a), so as to implement mutual attaching between the first battery cell group (200a) and the second battery cell group (200b).

3. The battery (10) according to claim 2, **characterized in that** a difference between a size of the first battery cell group (200a) in the first direction (z) and a size of the second battery cell group (200b) in the first direction (z) falls within a predetermined range; and/or
a difference between a size of the first battery cell group (200a) in a third direction and a size of the second battery cell group (200b) in the third direction (x) falls within a predetermined range, wherein the third direction (x) is perpendicular to the first direction (z) and the second direction (y).

4. The battery (10) according to claim 2 or 3, **characterized in that** the battery (10) comprises two first battery cell groups (200a) and one second battery cell group (200b) that are arranged in the second direction (y); and
in the second direction (y), the two first battery cell groups (200a) are located at two ends of the one second battery cell group (200b), respectively.

5. The battery (10) according to claim 2 or 3, **characterized in that** the battery (10) comprises one first battery cell group (200a) and two second battery cell groups (200b) that are arranged in the second direction (y); and
in the second direction (y), the two second battery cell groups (200b) are located at two ends of the one first battery cell group (200a), respectively.

6. The battery (10) according to claim 2 or 3, **characterized in that** the battery (10) comprises a plurality of first battery cell groups (200a) and a plurality of second battery cell groups (200b) that are arranged in the second direction (y); and
the plurality of first battery cell groups (200a) and the plurality of second battery cell groups (200b) are alternately arranged in the second direction (y).

7. The battery (10) according to claim 6, **characterized in that** all of the first battery cell groups (200a) have a same number of the first battery cells (20a); and/or
all of the second battery cell groups (200b) have a same number of the second battery cells (20b).

8. The battery (10) according to any one of claims 1 to 7, **characterized in that** the first direction (z) is parallel to the direction of gravity, the first battery cell (20a) comprises a first wall (201a) and a second wall (202a) that are interconnected, and the second battery cell (20b) comprises a first wall (201b) and a second wall (202b) that are interconnected; and
the first wall (201a) of the first battery cell (20a) and the first wall (201b) of the second battery cell (20b) are perpendicular to the first direction (z), and the second wall (202a) of the first battery cell (20a) and the second wall (202b) of the second battery cell (20b) are both inclined with respect to the first direction (z).

9. The battery (10) according to claim 8, **characterized in that** the first battery cell (20a) comprises two first walls (201a) disposed opposite each other and two second walls (202a) disposed opposite each other, and the first battery cell (20a) has a parallelogram or trapezoid cross section on a plane perpendicular to the first wall (201a) and second wall (202a) thereof; and/or
the second battery cell (20b) comprises two first walls (201b) disposed opposite each other and two second walls (202b) disposed opposite each other, and the second battery cell (20b) has a parallelogram or trapezoid cross section on a plane perpendicular to the first wall (201b) and second wall (202b) thereof.

10. The battery (10) according to any one of claims 1 to 9, **characterized in that** the at least one first battery cell (20a) in the first battery cell group (200a) is arranged in its thickness direction, and the first wall (201a) and the second wall (202a) that are interconnected in the first battery cell (20a) extend in a length direction of the first battery cell (20a); and/or
the at least one of the second battery cell (20b) in the second battery cell group (200b) is arranged in its thickness direction, and the first wall (201b) and the second wall (202b) that are interconnected in the second battery cell (20b) extend in a length direction of the second battery cell (20b).

11. The battery (10) according to any one of claims 1 to 10, **characterized in that** the first battery cell (20a) further comprises a third wall (203a) located at one end of the first battery cell (20a) in the length direction, and electrode terminals (214a) of the first battery cell (20a) are disposed on the third wall (203a) of the first battery cell (20a); and/or
the second battery cell (20b) further comprises a third wall (203b) located at one end of the second battery cell (20b) in the length direction, and electrode terminals (214b) of the second battery cell (20b) are disposed on the third wall (203b) of the second battery cell (20b).

12. The battery (10) according to claim 11, **characterized in that** the electrode terminals (214a) of the at least one first battery cell (20a) in the first battery cell group (200a) are arranged in the first direction (z); and/or
the electrode terminals (214b) of the at least one second battery cell (20b) in the second battery cell group (200b) are arranged in the second direction (y).

13. The battery (10) according to claim 11 or 12, **characterized in that** the electrode terminals (214a) of the at least one first battery cell (20a) in the first battery cell group (200a) are disposed close to the second battery cell group (200b).

14. The battery (10) according to any one of claims 11 to 13, **characterized in that** in the first direction (z), the box (100) comprises a top cover and a bottom plate, in the second direction (y), the box (100) comprises a first side wall and a second side wall, and the first battery cell group (200a) and the second battery cell group (200b) are spaced apart from each other in the second direction (y); wherein the electrode terminals (214a) of the first battery cell (20a) in the first battery cell group (200a) are disposed close to the first side wall or the second side wall, and the electrode terminals (214b) of the second battery cell (20b) in the second battery cell group (200b) are disposed close to the top cover or the bottom plate.

15. The battery (10) according to claim 14, **characterized in that** the electrode terminals (214a) of adjacent ones of the at least one first battery cell (20a) in the first battery cell group (200a) are disposed close to each other or away from each other.

16. The battery (10) according to any one of claims 1 to 15, **characterized in that** the number of the first battery cells (20a) in the first battery cell group (200a) is less than or equal to the number of the second battery cells (20b) in the second battery cells group (200b).

17. The battery (10) according to any one of claims 1 to 16, **characterized in that** the first battery cell (20a) and the second battery cell (20b) are battery cells of two different chemical systems; and/or
the first battery cell (20a) has a coefficient of swelling smaller than that of the second battery cell (20b); and/or
the first battery cell (20a) has an energy density smaller than that of the second battery cell (20b).

18. An electric apparatus, **characterized by** comprising the battery (10) according to any one of claims 1 to 17, wherein the battery (10) is configured to supply electric energy for the electric apparatus.

19. A method (300) for preparing a battery, **characterized by** comprising:
providing (S301) a box (100);
providing (S302) a first battery cell group (200a) and a second battery cell group (200b), wherein the first battery cell group (200a) comprises at least one first battery cell (20a), the second battery cell group (200b) comprises at least one second battery cell, the first battery cell (20a) and the second battery cell are polyhedral structures, a wall with a largest area of the first battery cell (20a) serves as a first wall (201a) of the first battery cell (20a), and a wall with a largest area of the second battery cell (20b) serves as a second wall (202b) of the second battery cell (20b);
the at least one first battery cell (20a) in the first battery cell group (200a) is arranged in a first direction (z), adjacent ones of the at least one first battery cell (20a) are mutually attached through first walls (201a) thereof, the at least one second battery cell (20b) in the second battery cell group (200b) is arranged in a second direction (y), adjacent ones of the at least one second battery cell (20b) are mutually attached through second walls (202b) thereof, and the first direction (z) is perpendicular to the second direction (y); and
accommodating (S303) the first battery cell group (200a) and the second battery cell group (200b) in the box (100).

20. An apparatus for preparing a battery, **characterized by** comprising:
a providing module (401), configured to:
provide a box (100); and
provide a first battery cell group (200a) and a second battery cell group (200b), wherein the first battery cell group (200a) comprises at least one first battery cell (20a), the second battery cell group (200b) comprises at least one second battery cell (20b), the first battery cell (20a) and the second battery cell (20b) are polyhedral structures, a wall with a largest area of the first battery cell (20a) serves as a first wall (201a) of the first battery cell (20a), and a wall with a largest area of the second battery cell (20b) serves as a second wall (202a) of the second battery cell (20b);
the at least one first battery cell (20a) in the first battery cell group (200a) is arranged in a first direction (z), adjacent ones of the at least one first battery cell (20a) are mutually attached through first walls (201a) thereof, the at least one second battery cell (20b) in the second battery cell group (200b) is arranged in a second direction (y), adjacent ones of the at least one second battery cell (20b) are mutually attached through second walls (202b) thereof, and the first direction (z) is perpendicular to the second direction (y); and
an installation module (402), configured to:
accommodate the first battery cell group (200a) and the second battery cell group (200b) in the box (100).
